(19) **Europäisches Patentamt / European Patent Office / Office européen des brevets**

(11) **EP 3 202 811 A1**

(12) **EUROPEAN PATENT APPLICATION**
published in accordance with Art. 153(4) EPC

(43) Date of publication:
**09.08.2017 Bulletin 2017/32**

(21) Application number: **15846696.1**

(22) Date of filing: **30.09.2015**

(51) Int Cl.:
*C08G 59/68* (2006.01)    *C09D 7/12* (2006.01)
*C09D 163/00* (2006.01)

(86) International application number:
**PCT/JP2015/077770**

(87) International publication number:
**WO 2016/052636 (07.04.2016 Gazette 2016/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **02.10.2014 JP 2014203949**

(71) Applicant: **Kaneka Corporation
Osaka-shi, Osaka 530-8288 (JP)**

(72) Inventors:
• **TSUKAO, Atsushi
Takasago-shi
Hyogo 676-8688 (JP)**
• **FUKAUMI, Hiroki
Takasago-shi
Hyogo 676-8688 (JP)**

(74) Representative: **Vossius & Partner
Patentanwälte Rechtsanwälte mbB
Siebertstrasse 3
81675 München (DE)**

(54) **ACTINIC RADIATION CURABLE COMPOSITION**

(57)    Provided is a coated product which is good in curing property, abrasion resistance, chemical resistance, and weather resistance. An active energy ray curable composition of the present invention contains a copolymer (A) and a photo-acid generator (B), the copolymer (A) being obtained by reacting a cocondensate (a), having a polymerizable unsaturated group, with a polymerizable unsaturated monomer (b), the cocondensate (a) being obtained by hydrolyzing and condensing a specific silane compound.

FIG. 1

## Description

Technical Field

The present invention relates to a one-part active energy ray curable composition which is excellent in curing property, abrasion resistance, and chemical resistance.

Background Art

For the purpose of impartation of abrasion resistance, chemical resistance, and weather resistance to a molded product, a film, a sheet, and the like each made of plastic or metal, the molded product, the film, the sheet, and the like are coated with various coating agents. In recent years, in particular, there has been widely used an active energy ray curable coating agent which is so rapidly curable as to be excellent in workability and which further forms a coating film that is excellent in abrasion resistance and chemical resistance.

As the active energy ray curable coating agent, there has been reported an active energy ray curable coating agent which contains a polyfunctional monomer or a polyfunctional oligomer as a main component and which is UV curable with use of a photo-radical generator (see Patent Literature 1). However, the active energy ray curable coating agent which is curable with use of a photo-radical generator cannot provide a cured coating film having an intended coating property, unless the active energy ray curable coating agent is irradiated with an active energy ray having sufficient energy.

That is, in a case where a coating target object has a three-dimensional shape, the coating target object may have a portion which is difficult to irradiate with an active energy ray. Therefore, even in a case where the active energy ray curable coating agent is transparent, the active energy ray curable coating agent is not sufficiently cured on such a portion. This causes a problem that an intended coating property cannot be obtained in the portion due to poor curing of the active energy ray curable coating agent.

In a case where the active energy ray curable coating agent contains a pigment, an active energy ray may be blocked by the pigment. Therefore, an inside of a coating film, formed by such an active energy ray curable coating agent, is difficult to sufficiently irradiate with an active energy ray. This causes a problem that an intended coating property cannot be obtained due to poor curing of the active energy ray curable coating agent.

Further, there is also a problem that a coating film obtained from the active energy ray curable coating agent which is curable with use of a photo-radical generator is poor in weather resistance.

In view of the problem, for the purpose of improvement in weather resistance, use of an active energy ray curable coating agent containing a silicon compound has been reported (see Patent Literatures 2 through 4). According to such an active energy ray curable coating agent, intermolecular cross-link is formed by a siloxane bond. Accordingly, the active energy ray curable coating agent is easily hydrolyzed by alkali, and thus has insufficient alkali resistance. There has been therefore a demand for development of (i) a coating agent which is excellent in curing property even under a condition that an active energy ray is partially blocked, which can be easily handled, and which can further provide a coating film that is excellent in abrasion resistance and chemical resistance and (ii) a coated product which is coated with such a coating agent.

Under the circumstances, there has been disclosed a method in which (i) a base material having a three-dimensional shape or a non-irradiated portion is coated with a coating resin composition containing (a) a hydrolyzable silicon group containing (meth)acrylic copolymer, (b) a specific photo-acid generator, and/or (c) a specific photo-base generator and (ii) the base material thus coated with the coating resin composition is irradiated with an ultraviolet ray with use of a high pressure mercury lamp or the like (see Patent Literature 5). According to the above method, a cured coating film is formed, in a short time period, even on a portion of the base material which portion is difficult to irradiate with an active energy ray. Furthermore, according to the above method, a coated product which is excellent in weather resistance, solvent resistance, and chemical resistance is obtained. According to the above method, however, there is still room for improvement in abrasion resistance of an obtained coated product.

Citation List

[Patent Literatures]

[Patent Literature 1]
Japanese Patent Application Publication, Tokukaihei, No. 5-230397 (Publication date: September 7, 1993)
[Patent Literature 2]

Japanese Patent Application Publication, Tokukai, 2000-109695 (Publication date: April 18, 2000)
[Patent Literature 3]
Japanese Patent Application Publication, Tokukai, 2009-73944 (Publication date: April 9, 2009)
[Patent Literature 4]
International Publication No. 2014/061630, Pamphlet (Publication date: April 24, 2014)
[Patent Literature 5]
Japanese Patent Application Publication, Tokukai, 2014-118557 (Publication date: June 30, 2014)

Summary of Invention

Technical Problem

An object of the present invention is to provide, with use of an active energy ray curable coating material, a coated product which is good in curing property, abrasion resistance, chemical resistance, and weather resistance, even (i) in a case where a coating target object has a three-dimensional shape and accordingly has a portion which is so difficult to irradiate with an active energy ray that even a transparent coating agent is not sufficiently cured on such a portion and (ii) in a case where the active energy ray curable coating material contains a pigment, which causes an inside of a coating film to be difficult to irradiate with an active energy ray.

Solution to Problem

The inventors of the present invention found that, by using an active energy ray curable composition containing a photo-acid generator and a copolymer which is obtained by reacting a polymerizable unsaturated monomer with a cocondensate having an epoxy structure containing group and a polymerizable unsaturated group, it is possible to obtain a coated product which is good in abrasion resistance, chemical resistance, and weather resistance, even in the foregoing situations, that is, in situations in each of which the active energy ray curable composition is difficult to irradiate with an active energy ray.
The present invention is arranged as below.

[1] An active energy ray curable composition containing: a copolymer (A); and a photo-acid generator (B), the copolymer (A) being obtained by reacting a cocondensate (a) with a polymerizable unsaturated monomer (b), the cocondensate (a) being obtained by hydrolyzing and condensing a silane compound (I), having a hydrolyzable silyl group, and a silane compound (II), having a hydrolyzable silyl group, the cocondensate (a) having 0.1 to 3.0 polymerizable unsaturated groups per molecule, the silane compound (I) being represented by the following general formula (I):

$$R^1\text{-}(SiR^2_a(OR^3)_{3-a}) \qquad (I)$$

wherein: $R^1$ represents a C1-C10 alkyl group terminally substituted by an epoxy structure containing group; each $R^2$ independently represents a hydrogen atom or a monovalent hydrocarbon group selected from a C1-C10 alkyl group, a C6-C25 aryl group, and a C7-C12 aralkyl group; each $R^3$ independently represents a hydrogen atom or a C1-C10 alkyl group; and "a" represents an integer of 0 to 2,
the silane compound (II) being represented by the following general formula (II):

$$R^4\text{-}(SiR^2_a(OR^3)_{3-a}) \qquad (II)$$

wherein: $R^4$ is selected from a substituted C1-C10 alkyl group, an alkenyl group, and an unsubstituted or substituted aryl group each terminally having a polymerizable unsaturated group and each having no epoxy structure containing group; each $R^2$ independently represents a hydrogen atom or a monovalent hydrocarbon group selected from a C1-C10 alkyl group, a C6-C25 aryl group, and a C7-C12 aralkyl group; each $R^3$ independently represents a hydrogen atom or a C1-C10 alkyl group; and "a" represents an integer of 0 to 2.
[2] The active energy ray curable composition as set forth in [1], wherein the polymerizable unsaturated monomer (b) is at least one kind of monomer selected from the group consisting of a monomer having a (meth)acryloyl group, a monomer having a vinyl group, a monomer having an aryl group, and a monomer having a styryl group.
[3] The active energy ray curable composition as set forth in [1] or [2], wherein the polymerizable unsaturated monomer (b) contains a polymerizable unsaturated monomer having at least one or more kinds of hydrolyzable silyl groups and/or a polymerizable unsaturated monomer having an epoxy group.
[4] The active energy ray curable composition as set forth in any one of [1] through [3], wherein the active energy ray curable composition contains the photo-acid generator (B) in an amount of 0.01 parts by mass to 10 parts by mass relative to 100 parts by mass of the copolymer (A).

[5] The active energy ray curable composition as set forth in any one of [1] through [4], wherein the photo-acid generator (B) is an aromatic sulfonium salt or an aromatic iodonium salt.

[6] The active energy ray curable composition as set forth in [5], wherein a counter anion of the photo-acid generator (B) is a fluorophosphonate anion or a fluoroantimonate anion.

[7] The active energy ray curable composition as set forth in any one of [1] through [6], further including a pigment (C).

[8] The active energy ray curable composition as set forth in any one of [1] through [7], further including a photosensitizer (D).

[9] The active energy ray curable composition as set forth in [8], wherein the photosensitizer (D) is an anthracene derivative, a thioxanthone derivative, or a benzophenone derivative.

[10] A method of forming a cured coating film, the method including: applying, to a base material, an active energy ray curable composition recited in any one of [1] through [9]; and irradiating the active energy ray curable composition with an active energy ray, so that a cured film is formed.

[11] A cured product obtained by (i) applying, to a base material, an active energy ray curable composition recited in any one of [1] through [9] and (ii) irradiating the active energy ray curable composition with an active energy ray so that a cured film is formed.

[12] A laminated product in which a cured film made of an active energy ray curable composition recited in any one of [1] through [9] is formed on a surface of a base material.

Advantageous Effects of Invention

According to the present invention, it is possible to provide, with use of an active energy ray curable coating material, a coated product which is good in curing property, abrasion resistance, chemical resistance, and weather resistance, even (i) in a case where a coating target object has a three-dimensional shape and accordingly has a portion which is so difficult to irradiate with an active energy ray that even a transparent coating agent is not sufficiently cured on such a portion and (ii) in a case where the active energy ray curable coating material contains a pigment, which causes an inside of a coating film to be difficult to irradiate with an active energy ray.

Brief Description of Drawings

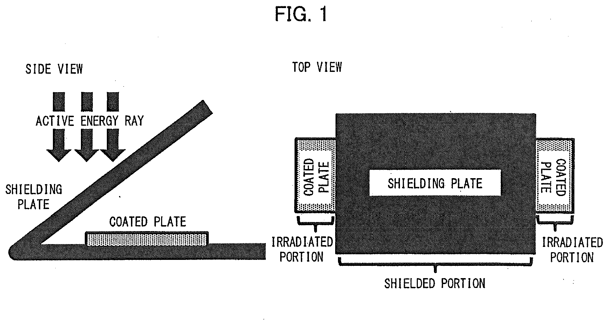

Fig. 1 is a view illustrating a state where an ABS plate, coated with a resin composition prepared as shown in each of Tables 6 and 8 through 10, is irradiated with an active energy ray while part of the ABS plate is being shielded with use of a shielding plate.

Description of Embodiments

The following description will discuss the present invention in detail.

An active energy ray curable composition of the present invention contains a copolymer (A) and a photo-acid generator (B), the copolymer (A) being obtained by reacting a cocondensate (a), having a polymerizable unsaturated group, with a polymerizable unsaturated monomer (b), the cocondensate (a) being obtained by hydrolyzing and condensing a silane compound (I), having a hydrolyzable silyl group, and a silane compound (II), having a hydrolyzable silyl group.

<Copolymer (A)>

The copolymer (A) of the present invention is a copolymer obtained by reacting a polymerizable unsaturated monomer (b) with a cocondensate (a) having a polymerizable unsaturated group. The cocondensate (a) is obtained by hydrolyzing and condensing (i) a silane compound (I) having a hydrolyzable silyl group, which silane compound (I) is represented by the following general formula (I), and (ii) a silane compound (II) having a hydrolyzable silyl group, which silane compound (II) is represented by the following general formula (II).

The silane compound (I) having a hydrolyzable silyl group is represented by the following general formula (I):

$$R^1\text{-}(SiR^2_a(OR^3)_{3-a})\qquad\text{(I)}$$

wherein: $R^1$ represents a C1-C10 alkyl group terminally substituted by an epoxy structure containing group; each $R^2$ independently represents a hydrogen atom or a monovalent hydrocarbon group selected from a C1-C10 alkyl group, a C6-C25 aryl group, and a C7-C12 aralkyl group; each $R^3$ independently represents a hydrogen atom or a C1-C10 alkyl group; and "a" represents an integer of 0 to 2.

The silane compound (II) having a hydrolyzable silyl group is represented by the following general formula (II):

$$R^4\text{-}(SiR^2_a(OR^3)_{3-a}) \qquad (II)$$

wherein: $R^4$ is selected from a substituted C1-C10 alkyl group, an alkenyl group, and an unsubstituted or substituted aryl group each terminally having a polymerizable unsaturated group and each having no epoxy structure containing group; each $R^2$ independently represents a hydrogen atom or a monovalent hydrocarbon group selected from a C1-C10 alkyl group, a C6-C25 aryl group, and a C7-C12 aralkyl group; each $R^3$ independently represents a hydrogen atom or a C1-C10 alkyl group; and "a" represents an integer of 0 to 2.

Specific examples of the alkyl group terminally substituted by an epoxy structure containing group, which alkyl group is represented by $R^1$ in the general formula (I), include a methyl group, an ethyl group, a propyl group, an isopropyl group, a butyl group, an isobutyl group, an amyl group, an isoamyl group, a hexyl group, a cyclohexyl group, a cyclohexylmethyl group, a cyclohexylethyl group, a heptyl group, an isoheptyl group, an n-octyl group, an isooctyl group, and a 2-ethylhexyl group each terminally substituted by an epoxy structure containing group. The epoxy structure containing group of $R^1$ in the general formula (I) only needs to contain an epoxy group. Examples of the epoxy structure containing group include an epoxy group, a glycidyl ether group, and an epoxycyclohexyl group.

$R^1$ in the general formula (I) can be alternatively a C1-C10 alkyl group terminally substituted by a 3,4-epoxycyclohexyl group. Examples of the C1-C10 alkyl group terminally substituted by a 3,4-epoxycyclohexyl group include a (3,4-epoxycyclohexyl)methyl group, a (3,4-epoxycyclohexyl)ethyl group, a (3,4-epoxycyclohexyl)propyl group, (3,4-epoxycyclohexyl)butyl group, a (3,4-epoxycyclohexyl)pentyl group, and a (3,4-epoxycyclohexyl)hexyl group.

Each $R^2$ in each of the general formulae (I) and (II) independently represents a hydrogen atom or a monovalent hydrocarbon group selected from a C1-C10 alkyl group, a C6-C25 aryl group, and a C7-C12 aralkyl group. Examples of such a hydrocarbon include a methyl group, an ethyl group, a propyl group, a butyl group, a pentyl group, a hexyl group, an octyl group, a nonyl group, a decyl group, a phenyl group, a tolyl group, a xylyl group, a naphthyl group, a benzyl group, and a phenethyl group.

Each $R^3$ in each of general formulae (I) and (II) independently represents a hydrogen atom or a C1-C10 alkyl group. Examples of the C1-C10 alkyl group represented by $R^3$ include a methyl group, an ethyl group, a propyl group, a butyl group, a pentyl group, a hexyl group, an octyl group, a nonyl group, and a decyl group.

Specific examples of the compound represented by the general formula (I) include: glycidyl group containing silanes such as 1-glycidyloxymethyltrimethoxysilane, 1-glycidyloxymethylmethyldimethoxysilane, 1-glycidyloxymethyltriethoxysilane, 1-glycidyloxymethylmethyldiethoxysilane, 2-glycidyloxyethyltrimethoxysilane, 2-glycidyloxyethylmethyldimethoxysilane, 2-glycidyloxyethyltriethoxysilane, 2-glycidyloxyethylmethyldiethoxysilane, 3-glycidyloxypropyltrimethoxysilane, 3-glycidyloxypropylmethyldimethoxysilane, 3-glycidyloxypropyltriethoxysilane, 3-glycidyloxypropylmethyldiethoxysilane, 4-glycidyloxybutyltrimethoxysilane, 4-glycidyloxybutylmethyldimethoxysilane, 4-glycidyloxybutyltriethoxysilane, 4-glycidyloxybutylmethyldiethoxysilane, 6-glycidyloxyhexyltrimethoxysilane, 6-glycidyloxyhexylmethyldimethoxysilane, 6-glycidyloxyhexyltriethoxysilane, 6-glycidyloxyhexylmethyldiethoxysilane, 8-glycidyloxyoctyltrimethoxysilane, 8-glycidyloxyoctylmethyldimethoxysilane, 8-glycidyloxyoctyltriethoxysilane, and 8-glycidyloxyoctylmethyldiethoxysilane; alicyclic epoxy group containing silanes such as 1-(3,4-epoxycyclohexyl)methyltrimethoxysilane, 1-(3,4-epoxycyclohexyl)methylmethyldimethoxysilane, 1-(3,4-epoxycyclohexyl)methyltriethoxysilane, 1-(3,4-epoxycyclohexyl)methylmethyldiethoxysilane, 2-(3,4-epoxycyclohexyl)ethyltrimethoxysilane, 2-(3,4-epoxycyclohexyl)ethylmethyldimethoxysilane, 2-(3,4-epoxycyclohexyl)ethyltriethoxysilane, 2-(3,4-epoxycyclohexyl)ethylmethyldiethoxysilane, 3-(3,4-epoxycyclohexyl)propyltrimethoxysilane, 3-(3,4-epoxycyclohexyl)propylmethyldimethoxysilane, 3-(3,4-epoxycyclohexyl)propyltriethoxysilane, 3-(3,4-epoxycyclohexyl)propylmethyldiethoxysilane, 4-(3,4-epoxycyclohexyl)butyltrimethoxysilane, 4-(3,4-epoxycyclohexyl)butylmethyldimethoxysilane, 4-(3,4-epoxycyclohexyl)butyltriethoxysilane, 4-(3,4-epoxycyclohexyl)butylmethyldiethoxysilane, 6-(3,4-epoxycyclohexyl)hexyltrimethoxysilane, 6-(3,4-epoxycyclohexyl)hexylmethyldimethoxysilane, 6-(3,4-epoxycyclohexyl)hexyltriethoxysilane, 6-(3,4-epoxycyclohexyl)hexylmethyldiethoxysilane, 8-(3,4-epoxycyclohexyl)octyltrimethoxysilane, 8-(3,4-epoxycyclohexyl)octylmethyldimethoxysilane, 8-(3,4-epoxycyclohexyl)octyltriethoxysilane, and 8-(3,4-epoxycyclohexyl)octylmethyldiethoxysilane; and epoxy group containing silanes such as epoxytrimethoxysilane, epoxymethyldimethoxysilane, epoxytriethoxysilane, epoxymethyldiethoxysilane, 1-epoxymethyltrimethoxysilane, 1-epoxymethylmethyldimethoxysilane, 1-epoxymethyltriethoxysilane, 1-epoxymethylmethyldiethoxysilane, 2-epoxyethyltrimethoxysilane, 2-epoxyethylmethyldimethoxysilane, 2-epoxyethyltriethoxysilane, 2-epoxyethylmethyldiethoxysilane, 3-epoxypropyltrimethoxysilane, 3-epoxypropylmethyldimethoxysilane, 3-epoxypropyltriethoxysilane, 3-epoxypropylmethyldiethoxysilane, 4-epoxybutyltrimethoxysilane, 4-epoxybutylmethyldimethoxysilane, 4-epoxybutyltriethoxysilane, 4-epoxybutylmethyldiethoxysilane, 6-epoxyhexyltrimethoxysilane, 6-epoxyhexylmethyldimethoxysilane, 6-epoxyhexyltriethoxysilane, 6-epoxyhexylmethyldiethoxysilane, 8-epoxyoctyltrimethoxysilane, 8-epoxyoctylmethyldimethoxysilane, 8-epoxyoctyltriethoxysilane, and 8-epoxyoctylmethyldiethoxysilane.

Out of the above compounds, 3-glycidyloxypropyltrimethoxysilane and 1-(3,4-epoxycyclohexyl)methyltrimethoxysilane are particularly suitable from the viewpoint of availability.

As described above, from the viewpoint of ease of hydrolysis and condensation of the silane compounds each having a hydrolyzable silyl group, the C1-C10 alkyl group of $R^3$ in each of the general formulae (I) and (II) is preferably a C 1-C3 alkyl group, and most preferably a C1 alkyl group.

From the viewpoint of reactivity of the epoxy structure containing group at the time of irradiation with an active energy ray, it is important that, in the compound represented by the general formula (I), the epoxy structure containing group is linked with silicon preferably via 1 to 4 carbon atom(s), more preferably via 2 or 3 carbon atoms..

$R^4$ in the general formula (II) is selected from a substituted C1-C10 alkyl group, an alkenyl group, and an unsubstituted or substituted aryl group each terminally having a polymerizable unsaturated group and each having no 3,4-epoxycyclohexyl group. Examples of the polymerizable unsaturated group include a (meth)acryloyl group.

Examples of the silane compound in which $R^4$ is a (meth)acryloyl group substituted alkyl group include (meth)acryloxymethyltrimethoxysilane, (meth)acryloxymethylmethyldimethoxysilane, (meth)acryloxymethyldimethylmethoxysilane, (meth)acryloxymethyltriethoxysilane, (meth)acryloxymethylmethyldiethoxysilane, (meth)acryloxymethyldimethylethoxysilane, 2-(meth)acryloxyethyltrimethoxysilane, 2-(meth)acryloxyethylmethyldimethoxysilane, 2-(meth)acryloxyethyldimethylmethoxysilane, 2-(meth)acryloxyethyltriethoxysilane, 2-(meth)acryloxyethylmethyldiethoxysilane, 2-(meth)acryloxyethyldimethylethoxysilane, 3-(meth)acryloxypropyltrimethoxysilane, 3-(meth)acryloxypropylmethyldimethoxysilane, 3-(meth)acryloxypropyldimethylmethoxysilane, 3-(meth)acryloxypropyltriethoxysilane, 3-(meth)acryloxypropylmethyldiethoxysilane, 3-(meth)acryloxypropyldimethylethoxysilane, 4-(meth)acryloxybutyltrimethoxysilane, 4-(meth)acryloxybutylmethyldimethoxysilane, 4-(meth)acryloxybutyldimethylmethoxysilane, 4-(meth)acryloxybutyltriethoxysilane, 4-(meth)acryloxybutylmethyldiethoxysilane, 4-(meth)acryloxybutyldimethylethoxysilane, 5-(meth)acryloxypentyltrimethoxysilane, 5-(meth)acryloxypentylmethyldimethoxysilane, 5-(meth)acryloxypentyldimethylmethoxysilane, 5-(meth)acryloxypentyltriethoxysilane, 5-(meth)acryloxypentylmethyldiethoxysilane, 5-(meth)acryloxypentyldimethylethoxysilane, 6-(meth)acryloxyhexyltrimethoxysilane, 6-(meth)acryloxyhexylmethyldimethoxysilane, 6-(meth)acryloxyhexyldimethylmethoxysilane, 6-(meth)acryloxyhexyltriethoxysilane, 6-(meth)acryloxyhexylmethyldiethoxysilane, and 6-(meth)acryloxyhexyldimethylethoxysilane.

Examples of the silane compound in which $R^4$ is an alkenyl group include vinyltrimethoxysilane, vinylmethyldimethoxysilane, vinyldimethylmethoxysilane, vinyltriethoxysilane, vinylmethyldiethoxysilane, and vinyldimethylethoxysilane.

Examples of the silane compound in which $R^4$ is an unsubstituted aryl group include aryltrimethoxysilane and aryltriethoxysilane.

Examples of the silane compound in which $R^4$ is a substituted aryl group include p-styryltrimethoxysilane, p-styrylmethyldimethoxysilane, 9p-styryldimethylmethoxysilane, p-styryltriethoxysilane, p-styrylmethyldiethoxysilane, and p-styryldimethylethoxysilane.

In terms of thermal radical polymerization reactivity, $R^4$ is preferably a (meth)acryloyl group substituted alkyl group.

From the viewpoint of (i) an increase in crosslink density at the time of irradiation with an active energy ray and (ii) an improvement in physical properties (particularly, abrasion resistance) of a cured product, the cocondensate (a) preferably has, per molecule, 4 or more epoxy structure containing groups, more preferably 5 or more epoxy structure containing groups, and still more preferably 6 or more epoxy structure containing groups.

The cocondensate (a) preferably has, per molecule, 0.1 or more and 3.0 or fewer polymerizable unsaturated groups, more preferably 0.3 or more and 2.0 or fewer polymerizable unsaturated groups, and still more preferably 0.5 or more and 1.5 or fewer polymerizable unsaturated groups.

The cocondensate (a) having less than 0.1 polymerizable unsaturated groups per molecule tends not to sufficiently react with the polymerizable unsaturated monomer (b). Meanwhile, the cocondensate (a) having more than 3.0 polymerizable unsaturated groups per molecule is extremely likely to gelate while reacting with the polymerizable unsaturated monomer (b).

The cocondensate (a) can have, per molecule, 0.1 or more and 1 or fewer polymerizable unsaturated group(s), 0.3 or more and 0.8 or fewer polymerizable unsaturated groups, or 0.5 or more and 0.7 or fewer polymerizable unsaturated groups.

Note, here, that the number of epoxy structure containing groups which the cocondensate (a) has per molecule is calculated based on an expression below. Similarly, the number of polymerizable unsaturated groups which the cocondensate (a) has per molecule is calculated based on an expression below.

The number of epoxy structure containing groups =

$$S \times M_a / (M_I \times S + M_{II} \times T - X\}$$

The number of polymerizable unsaturated groups =

$$T \times M_a / (M_I \times S + M_{II} \times T - X)$$

$M_a$: Weight average molecular weight of the cocondensate (a)
$M_I$: Molecular weight of the silane compound (I) having a hydrolyzable silyl group
$M_{II}$: Molecular weight of the silane compound (II) having a hydrolyzable silyl group
S: Mol% of the silane compound (I) having a hydrolyzable silyl group
T: Mol% of the silane compound (II) having a hydrolyzable silyl group
X: Mass of an alkyl group or of a hydrogen atom and an oxygen atom each of which alkyl group, hydrogen atom, and oxygen atom is desorbed from the silane compounds (I) and (II) each having a hydrolyzable silyl group, in a case where all of the hydrolyzable silyl groups of the silane compounds (I) and (II) are hydrolyzed and condensed.

Note that, for example, in a case where β-(3,4-epoxycyclohexyl)ethyltrimethoxysilane is used as the silane compound (I) and γ-methacryloxypropyltrimethoxysilane is used as the silane compound (II), X = 69. For example, in a case where 3-glycidyloxypropyltrimethoxysilane is used as the silane compound (I) and γ-methacryloxypropyltrimethoxysilane is used as the silane compound (II), X = 69.

A weight average molecular weight of the cocondensate (a) is preferably not less than 500, more preferably not less than 1,000, still more preferably not less than 1,500, and particularly preferably not less than 2,000 and not more than 4,000. Furthermore, the weight average molecular weight is preferably not more than 20,000, more preferably not more than 18,000, still more preferably not more than 16,000, particularly preferably not more than 14,000, and most preferably not more than 12,000.

The cocondensate (a) having a weight average molecular weight of not less than 500 does not have volatility. Therefore, such a cocondensate (a) does not partially or entirely volatilize before the active energy ray curable composition is cured. Furthermore, the active energy ray curable composition tends to have more improved impact resistance as the cocondensate (a) becomes greater in weight average molecular weight. The cocondensate (a) having a weight average molecular weight of not more than 20,000 causes the copolymer (A) not to have excessively high viscosity. Therefore, in such a case, the copolymer (A) tends to be excellent in workability. Note that the weight average molecular weight is one that is measured by GPC.

According to the present invention, examples of the polymerizable unsaturated monomer (b), which is reacted with the cocondensate (a) having an epoxy structure containing group and a polymerizable unsaturated group include:

(meth)acrylic acid esters such as methyl (meth)acrylate, ethyl (meth)acrylate, n-butyl (meth)acrylate, i-butyl (meth)acrylate, t-butyl (meth)acrylate, cyclohexyl (meth)acrylate, 2-ethylhexyl (meth)acrylate, stearyl (meth)acrylate, lauryl (meth)acrylate, benzyl (meth)acrylate, 3,3,5-trimethylcyclohexyl (meth)acrylate, glycidyl (meth)acrylate, isobornyl (meth)acrylate, (meth)acryloylmorpholine, 2-hydroxyethyl (meth)acrylate, 2-hydroxypropyl (meth)acrylate, 2-hydroxybutyl (meth)acrylate, 4-hydroxybutyl (meth)acrylate, and glycerol mono (meth) acrylate;
acrylamides such as (meth)acrylamide, α-ethyl (meth)acrylamide, N-butoxy methyl (meth)acrylamide, N,N-dimethyl (meth)acrylamide, N-methyl (meth)acrylamide, and N-methylol (meth)acrylamide;
2-hydroxyethyl vinyl ether, N-methylol (meth)acrylamide, 4-hydroxystyrene vinyl toluene, Aronix 5700 (manufactured by Toagosei Chemical Industry Co., Ltd.), 4-hydroxystyrene, and HE-10, HE-20, HP-1, and HP-2 (each manufactured by Nippon Shokubai Kagaku Kogyo Co., Ltd.) (each of which is an acrylic acid ester oligomer terminally having a hydroxyl group); polyalkyleneglycol (meth)acrylate derivatives such as Blemmer PP series, Blemmer PE series, and Blemmer PEP series (each manufactured by Nihon Yushi Co., Ltd.); and hydroxyl group containing vinyl monomers and/or derivatives thereof, the hydroxyl group containing vinyl monomers including ε-caprolactone-modified hydroxyalkyl vinyl copolymer compounds Placcel FM-1 and FM-4 (each manufactured by Daicel Chemical Industries, Ltd. and each obtained by reacting a hydroxyl group containing compound with a ε-caprolactone), TONEM-201 (manufactured by UCC Ueshima Coffee Co., Ltd.), and a polycarbonate containing vinyl compound such as HEAC-1 (manufactured by Daicel Chemical Industries, Ltd.).

The examples of the polymerizable unsaturated monomer (b) further include:

Phosphoric ester group containing (meth)acrylic compounds, such as a condensation product of (meth)acrylic acid hydroxyalkyl ester and phosphoric acid or phosphoric ester, and (meth)acrylic acid ester compounds, such as (meth)acrylate which has an urethane bond or a siloxane bond;
aromatic hydrocarbon vinyl compounds such as styrene, α-methylstyrene, chlorostyrene, styrenesulfonic acid, 4-hydroxystyrene, and vinyl toluene;

unsaturated carboxylic acid anhydrides, such as maleic anhydride, and unsaturated carboxylic acid esters, such as diester or half ester of such acid anhydride and alcohol or amine each having a C1-C20 linear or branched chain;

aryl compounds and vinyl esters such as vinyl acetate, proprionic acid vinyl, and diallyl phthalate;

amino group containing vinyl compounds such as vinylpyridine and aminoethyl vinyl ether;

amide group containing vinyl compounds such as itaconic acid diamide, crotonic acid amide, maleic acid diamide, fumaric acid diamide, and N-vinylpyrrolidone; and

other vinyl compounds such as (meth)acrylonitrile, 2-hydroxyethyl vinyl ether, methyl vinyl ether, cyclohexyl vinyl ether, vinyl chloride, vinylidene chloride, chloroprene, propylene, butadiene, isoprene, fluoro olefin maleimide, N-vinylimidazole, and vinyl sulfonic acid.

Out of the above examples, from the viewpoint of damage resistance, chemical resistance, and weather resistance of a resultant cured coating film, the polymerizable unsaturated monomer (b) is preferably at least one kind of monomer selected from the group consisting of a monomer having a (meth)acryloyl group, a monomer having a vinyl group, a monomer having an aryl group, and a monomer having a styryl group. Further, from the same viewpoint, the polymerizable unsaturated monomer (b) preferably contains a polymerizable unsaturated monomer having at least one or more kinds of hydrolyzable silyl groups and/or a polymerizable unsaturated monomer having an epoxy group.

Examples of the polymerizable unsaturated monomer having a hydrolyzable silyl group include vinyltrimethoxysilane, vinylmethyldimethoxysilane, vinyltriethoxysilane, vinylmethyldiethoxysilane, vinyltris(2-methoxyethoxy)silane, vinyl triisopropoxysilane, 3-(meth)acryloxypropyltrimethoxysilane, 3-(meth)acryloxypropylmethyldimethoxysilane, 3-(meth)acryloxypropyltriethoxysilane, 3-(meth)acryloxypropylmethyldiethoxysilane, 3-(meth)acryloxypropyltri-n-propoxysilane, 3-(meth)acryloxypropyltriisopropoxysilane, vinyl triacetoxysilane, and 2-(meth)acryloxyethyltrimethoxysilane.

Each of those polymerizable unsaturated monomers each having a hydrolyzable silyl group can be used solely. Alternatively, two or more kinds of those polymerizable unsaturated monomers can be used in combination.

Out of the above examples, 3-(meth)acryloxypropyltrimethoxysilane, 3-(meth)acryloxypropylmethyldimethoxysilane, 3-(meth)acryloxypropyltriethoxysilane, 3-(meth)acryloxypropylmethyldiethoxysilane, and the like are particularly preferable from the viewpoint of ease of handling, cost, polymerization stability, and an excellent curing property of an obtained composition.

Examples of the polymerizable unsaturated monomer having an epoxy group include glycidyl (meth)acrylate, β-methylglycidyl (meth)acrylate, 3,4-epoxycyclohexylmethyl (meth)acrylate, and vinylcyclohexene monooxide 1,2-epoxy-4-vinylcyclohexene. Each of those polymerizable unsaturated monomers each having an epoxy group can be used solely. Alternatively, two or more kinds of those polymerizable unsaturated monomers each having an epoxy group can be used in combination. From the viewpoint of cost and availability, glycidyl (meth)acrylate is preferable.

Note that the polymerizable unsaturated monomer having a hydrolyzable silyl group and the polymerizable unsaturated monomer having an epoxy group can be each used solely or in combination.

According to the present invention, by reacting the polymerizable unsaturated monomer (b) with the cocondensate (a) having an epoxy group and a polymerizable unsaturated group, it is possible to increase a molecular weight of an obtained copolymer (A). This ultimately allows, in particular, (i) an improvement in curing property of the active energy ray curable composition and (ii) an improvement in abrasion resistance of a resultant cured coating film.

According to the present invention, a proportion of the cocondensate (a) to the copolymer (A) is preferably not less than 50% by weight, and more preferably 70% by weight to 90% by weight.

In a case where the proportion of the cocondensate (a) to the copolymer (A) is not less than 50% by weight, a resultant cured coating film tends to easily achieve abrasion resistance. Meanwhile, in a case where the proportion of the cocondensate (a) to the copolymer (A) is not more than 90% by weight, the active energy ray curable composition tends to have an improved curing property under a condition that an active energy ray is partially blocked.

An example method of producing the copolymer (A) of the present invention will be described below.

The copolymer (A) of the present invention can be produced, for example, by copolymerizing the polymerizable unsaturated monomer (b) and the cocondensate (a) having an epoxy group and a polymerizable unsaturated group, the cocondensate (a) being obtained by hydrolyzing and condensing the silane compound (I) having a hydrolyzable silyl group and the silane compound (II) having a hydrolyzable silyl group. Such copolymerization is carried out by a solution polymerization method or the like with use of a radical polymerization initiator such as azobisisobutyronitrile.

A weight average molecular weight of the copolymer (A) of the present invention is preferably not less than 10,000 and not more than 500,000, more preferably not less than 15,000 and not more than 400,000, and particularly preferably not less than 30,000 and not more than 300,000.

In a case where the weight average molecular weight of the copolymer (A) is not more than 300,000, the active energy ray curable composition having low viscosity is obtained. This tends to (i) cause an improvement in leveling property of the active energy ray curable composition at the time of spray coating or the like and (ii) ultimately cause a resultant coating film not to have an impaired appearance. In a case where the weight average molecular weight of the copolymer (A) is not less than 10,000, the active energy ray curable composition having a certain degree of viscosity is obtained. This tends to be less likely to cause a problem such as dropping of a coating liquid in a case where a base material having a three-dimensional surface is coated with the coating liquid. Furthermore, this tends to cause an improvement in curing property of the active energy ray curable composition under a condition that an active energy ray is partially blocked.

The weight average molecular weight of the copolymer (A) of the present invention can be not less than 100,000 and not more than 300,000 or can be not less than 120,000 and not more than 200,000.

Note that it is possible to increase the polymerization average molecular weight of the copolymer (A) with use of the cocondensate (a).

According to the present invention, the curable composition containing the copolymer (A) in a higher proportion tends to result in a coating film which is more excellent in abrasion resistance and chemical resistance. The curable composition contains the copolymer (A) in the proportion preferably of 30% by weight to 99% by weight, and more preferably of 50% by weight to 99% by weight.

<Photo-acid generator (B)>

A photo-acid generator which is a component (B) of the present invention is a compound which generates acid by being exposed to an active energy ray. Examples of the photo-acid generator include: strong acids such as toluene sulfonic acid and boron tetrafluoride; onium salts such as a sulfonium salt, an ammonium salt, a phosphonium salt, an iodonium salt, and a selenium salt; iron-arene complexes; silanol-metal chelate complexes; sulfonic acid derivatives such as disulfones, disulfonyl diazo methanes, disulfonyl methanes, sulfonyl benzoyl methanes, imide sulfonates, and benzoin sulfonates; and compounds (e.g., organic halogen compounds) each of which generates acid by being irradiated with an radioactive ray, such as a compound disclosed in the Japanese Patent Application Publication, Tokukaihei, No. 5-134412.

Examples of the sulfonic acid derivatives include: sulfonic acid esters such as benzointosylate, nitrobenzyltosylate, and succinic acid imide tosyl sulfonate which are disclosed in the U.S. Patent Publication No. 4618564; oxime sulfonates such as $\alpha$-(4-tosyloxyimino)-4-methoxybenzyl cyanide disclosed in the U.S. Patent Publication No. 4540598 and the Japanese Patent Application Publication, Tokukaihei, No. 6-67433; tris(methanesulfonyloxy)benzene disclosed in the Japanese Patent Application Publication, Tokukaihei, No. 6-348015; 9,10-dialkoxyanthracene sulfonic acid nitrobenzyl ester disclosed in the Japanese Patent Application Publication, Tokukaisho, No. 64-18143; and N-(p-dodecylbenzene sulfonyloxy)-1,8-naphthalimide.

Examples of the organic halogen compounds include: halogen containing triazine compounds, such as 2-(4-methoxyphenyl)-4,6-bis(trichloromethyl)-1,3,5-triazine, 2-(3,4-dimethoxystyryl)-4,6-bis(trichloromethyl)-1,3,5-triazine, and 2-[2-(5-methylfuran-2-yl)vinyl]-4,6-bis(trichloromethyl)-1,3,5-triazine, which are disclosed in the Japanese Patent Application Publication, Tokukaisho, No. 55-32070, the Japanese Patent Application Publication, Tokukaisho, No. 48-36281, and the Japanese Patent Application Publication, Tokukaisho, No. 63-238339; halogen containing sulfone compounds such as 2-pyridyl-tribromomethyl sulfone disclosed in the Japanese Patent Application Publication, Tokukaihei, No. 2-304059; halogenated alkyl phosphate esters such as tris(2-chloropropyl) phosphate, tris(2,3-dichloropropyl) phosphate, and tris(2,3-dibromopropyl)phosphate; halogen containing heterocyclic compounds such as 2-chloro-6-trichloromethyl)pyridine; and halogen containing hydrocarbon compounds such as 1,1-bis[p-chlorophenyl]-2,2,2-trichloroethane, a vinylidene chloride copolymer, a vinyl chloride copolymer, and chlorinated polyolefin.

Out of those photo-acid generators, an aromatic sulfonium salt or an aromatic iodonium salt is preferable from the viewpoint of (i) availability and (ii) high stability of the composition with the copolymer (A).

Furthermore, a counter anion of the aromatic sulfonium salt or the aromatic iodonium salt is preferably a fluorophosphonate anion, a fluoroantimonate anion, or a fluorosulfonate anion. Those counter anions cause the active energy ray curable composition to be rapidly cured and to be excellent in adhesion to a plastic base material. In consideration of safety, the fluorophosphonate anion or the fluorosulfonate anion is particularly preferable.

As the photo-acid generator, diphenyl(4-phenylthiophenyl)sulfonium hexafluorophosphate or diphenyl(4-phenylthiophenyl)sulfonium hexafluoroantimonate is preferable.

An amount of the photo-acid generator (B) to be contained in the active energy ray curable composition needs to be adjusted in accordance with an amount of acid to be generated and a rate at which the acid is generated. The photo-acid generator (B) is contained in an amount preferably of 0.01 parts by mass to 10 parts by mass relative to 100 parts by mass of the copolymer (A). Furthermore, the photo-acid generator (B) is contained in an amount preferably of 0.05 parts by weight to 30 parts by weight and more preferably of 0.1 parts by weight to 10 parts by weight, relative to 100 parts by weight of a solid content of the copolymer (A).

In a case where the photo-acid generator (B) is contained in an amount of not less than 0.05 parts by weight, a sufficient amount of acid is generated, and a coating film which is good in solvent resistance and chemical resistance tends to be obtained. In a case where the photo-acid generator (B) is contained in an amount of not more than 30 parts by weight, a problem, such as deterioration in appearance or coloring of a coating film, tends to be less likely to arise.

<Pigment (C)>

A pigment (C) can be added, as needed, to the active energy ray curable composition of the present invention for the purpose of execution of a design on the active energy ray curable composition.

Examples of the pigment (C) include: inorganic pigments such as titanium oxide, ultramarine blue, iron blue, zinc oxide, colcothar, chrome yellow, white lead, carbon black, transparent iron oxide, and aluminum powder; and organic pigments such as an azo pigment, a triphenylmethane pigment, a quinoline pigment, an anthraquinone pigment, and a phthalocyanine pigment.

An amount of the pigment to be added can be selected, as appropriate, in accordance with a kind of the pigment. For example, carbon black is added in an amount preferably of 1 part by weight to 5 parts by weight relative to 100 parts by weight of the solid content of the copolymer (A). From the viewpoint of balance between colorability and a curing property of the active energy ray curable composition, carbon black is added in an amount more preferably of 1 part by weight to 2 parts by weight relative to 100 parts by weight of the solid content of the copolymer (A).

In a case where carbon black is added in an amount of not less than 1 part by weight, sufficient colorability tends to be obtained. In a case where carbon black is added in an amount of not more than 5 parts by weight, an active energy ray is not excessively blocked, and thus a sufficient curing property tends to be obtained.

<Photosensitizer (D)>

A photosensitizer (D) can be used, as needed, for the active energy ray curable composition of the present invention, for the purpose of improvement in photosensitivity of the component (B).

It is more efficient to use the photosensitizer (D) which is capable of absorbing light in a wavelength region which light cannot be absorbed by the component (B) which is used. Accordingly, it is preferable to use the photosensitizer (D) which absorbs light in a wavelength region which less overlaps with a wavelength region of light which is absorbed by the component (B).

The photosensitizer (D) is not particularly limited. Examples of the photosensitizer (D) include an anthracene derivative, a benzophenone derivative, a thioxanthone derivative, an anthraquinone derivative, and a benzoin derivative. More detailed examples of the photosensitizer (D) include 9,10-dialkoxyanthracene, 2-alkylthioxanthone, 2,4-dialkylthioxanthone, 2-alkylanthraquinone, 2,4-dialkylanthraquinone, p,p'-aminobenzophenone, 2-hydroxy-4-alkoxybenzophenone, and benzoinether.

Further, specific examples of the photosensitizer (D) include anthrone, anthracene, 9,10-diphenylanthracene, 9-ethoxyanthracene, pyrene, perylene, coronene, phenanthrene, benzophenone, benzil, benzoin, methyl 2-benzoylbenzoate, butyl 2-benzoylbenzoate, benzoin ethyl ether, benzoin-i-butyl ether, 9-fluorenone, acetophenone, p,p'-tetramethyldiaminobenzophenone, p,p'-tetraethylaminobenzophenone, 2-chloro thioxanthone, 2-isopropyl thioxanthone, 2,4-diethyl thioxanthone, phenothiazine, acridine orange, benzoflavine, setoflavine T, 2-nitrofluorene, 5-nitroacenaphthene, benzoquinone, 2-chloro-4-nitroaniline, N-acetyl-p-nitroaniline, p-nitroaniline, N-acetyl-4-nitro-1-naphthylamine, picramide, anthraquinone, 2-ethylanthraquinone, 2-tert-butylanthraquinone, 1,2-benzanthraquinone, 3-methyl-1,3-diaza-1,9-benzanthrone, dibenzalacetone, 1,2-naphthoquinone, 3,3'-carbonyl-bis(5,7-dimethoxycarbonyl coumalin), 9,10-dibutoxyanthracene, and 9,10-dipropoxyanthracene.

Each of those photosensitizers can be used solely. Alternatively, two or more kinds of those the photosensitizers can be used in combination.

In a case where the photosensitizer (D) is used, an amount of the photosensitizer (D) to be added can be adjusted, as appropriate, in accordance with an intended curing rate. The photosensitizer (D) is added in an amount preferably of not less than 0.1 parts by weight, and more preferably of not less than 0.5 parts by weight, relative to 100 parts by weight of the photo-acid generator (B). Furthermore, the photosensitizer (D) is added in an amount preferably of not more than 10 parts by weight, and more preferably of not more than 5 parts by weight, relative to 100 parts by weight of the photo-acid generator (B).

In a case where the photosensitizer is added in an amount of not less than 0.1 parts by weight, an intended effect of the photosensitizer is easily obtained. In a case where the photosensitizer is added in an amount of not more than 10 parts by weight, a resultant coating film tends to be less likely to be colored. This tends to ultimately cause a reduction in cost.

<Active energy ray curable composition>

The active energy ray curable composition of the present invention contains the foregoing component (A) and the foregoing component (B). The active energy ray curable composition further contains, if necessary, the foregoing component (C) and/or the foregoing component (D). The active energy ray curable composition can further contain, as appropriate, various kinds of additives for adjusting physical properties of the active energy ray curable composition. For example, an additive, such as a plasticizer, a dispersant, a wetting agent, a thickener, or a defoaming agent, which is normally used for a coating material can be added to the active energy ray curable composition.

Furthermore, a solvent can be blended with the active energy ray curable composition of the present invention.

The solvent is not particularly limited. Note, however, that a base material made of plastic is likely to have low solvent resistance. Therefore, in a case where such a base material is used, ketones such as methyl isobutyl ketone and diisobutyl ketone; alcohols such as butanol and isopropyl alcohol; esters such as butyl acetate and isopropyl acetate; and ethers such as diethylene glycol methyl ether and propylene glycol methyl ether are preferable as the solvent.

In particular, it is preferable to use an ether solvent in the proportion of not less than 30% by weight of all of solvents in that the ether solvent used in such an amount does not damage the base material.

The solvent is blended in an amount preferably of 0 parts by weight to 300 parts by weight, and more preferably of 0 parts by weight to 150 parts by weight, relative to 100 parts by weight of a total amount of the component (A), the component (B), the component (C), and the component (D).

In a case where the solvent is blended in an amount of not more than 300 parts by weight, the base material is less likely to be damaged as described above. Therefore, the solvent is blended in an amount preferably of not more than 300 parts by weight.

A method of preparing the active energy ray curable composition of the present invention is not particularly limited, and a general method can be employed. For example, the active energy ray curable composition can be prepared as follows. That is, the foregoing components are blended with each other, and light is blocked if necessary. The components are mixed up with use of a hand mixer or a static mixer. Alternatively, the components are kneaded with use of a planetary mixer, a disperser, a roller, a kneader, or the like at a normal temperature or while being heated. Alternatively, the components are dissolved with use of a small amount of suitable solvent, and the components thus dissolved are mixed up.

<Cured product>

A cured product of the present invention is obtained by curing the active energy ray curable composition of the present invention.

A cured coating film or a cured product is obtained by (i) applying the active energy ray curable composition of the present invention to a base material and (ii) irradiating the active energy ray curable composition with an active energy ray so that a cured film is formed.

Examples of the active energy ray with which the active energy ray curable composition is irradiated so as to be cured include visible light, an ultraviolet ray, an infrared ray, an X ray, an $\alpha$ ray, a $\beta$ ray, and a $\delta$ ray. Out of those examples, an ultraviolet ray is most preferable in terms of (i) a high reaction rate and (ii) a relatively low cost of an active energy ray generator.

The active energy ray curable composition is irradiated with an active energy ray in an accumulated amount preferably of 50 mJ/cm$^2$ to 10,000 mJ/cm$^2$, and more preferably of 100 mJ/cm$^2$ to 2,000 mJ/cm$^2$.

In a case where the active energy ray curable composition is irradiated with an active energy ray in an amount of not less than 50 mJ/cm$^2$, it does not take a long time for the active energy ray curable composition to be cured, because the active energy ray curable composition is irradiated with a sufficient amount of active energy ray. This tends to cause an improvement in productivity. Meanwhile, in a case where the active energy ray curable composition is irradiated with an active energy ray in an amount of not more than 10,000 mJ/cm$^2$, the active energy ray curable composition tends to be cured with a good appearance, and is thus less likely to damage the base material.

A temperature at which the active energy ray curable composition is cured is not particularly limited. In general, the temperature is preferably not more than 100°C, more preferably not more than 80°C, and still more preferably not more than 50°C. In a case where the active energy ray curable composition is cured at a temperature lower than 100°C, distortion caused by a difference in linear expansion between the cured product and the base material tends to be less likely to occur. It is particularly preferable to cure the active energy ray curable composition at a room temperature.

<Laminated product>

It is possible to produce a laminated product with use of the active energy ray curable composition of the present invention.

The laminated product of the present invention can be obtained by a production method including the steps of: applying the active energy ray curable composition of the present invention to a base material; and irradiating the active energy ray curable composition with an active energy ray so that the active energy ray curable composition is cured to be a cured film.

The active energy ray curable composition of the present invention can be applied to the base material by any of a roll coater method, a blade coater method, a gravure coater method, a bead coater method, a curtain flow coater method, a dip coating method, and a spray applying method.

Note that, by using the active energy ray curable composition of the present invention as an active energy ray curable coating material, it is possible to obtain a coated product which is good in curing property, even (i) in a case where a coating target object has a three-dimensional shape and accordingly has a portion which is so difficult to irradiate with an active energy ray that even a transparent coating agent is not sufficiently cured on such a portion and (ii) in a case where the active energy ray curable composition contains a pigment, which causes an inside of a coating film to be difficult to irradiate with an active energy ray.

For example, in a case where an active energy ray curable composition is used, as a transparent coating agent, for a base material having a three-dimensional shape, the base material may have a portion (hereinafter also referred to as a "non-irradiated portion") which is in shadow and is accordingly not sufficiently irradiated with an active energy ray. According to the active energy ray curable composition of the present invention, however, the active energy ray curable composition is cured even on such a non-irradiated portion in one (1) day after irradiation with an active energy ray. This allows a uniform coating film to be obtained.

Furthermore, by irradiating, with the active energy ray, merely part of a portion of the base material which portion is coated with the active energy ray curable composition, it is possible to form a cured coating film on the whole of such a coated portion of the base material in one (1) day after the irradiation. Note that the term "part" specifically indicates not less than 15% of a coated surface. It is also possible to obtain a cured coating film by irradiating not less than 10% or not less than 5% of the coated surface with an active energy ray. In a case where not less than 15% of the coated surface is irradiated with an active energy ray, a cured coating film is formed on the whole of the coated surface in one (1) day after irradiation.

In a case where the base material has a three-dimensional shape, a distance between the base material and an irradiation device including a planar or linear irradiation section varies depending on a portion of the base material. This makes it difficult to obtain a uniform cured coating film with use of a conventional curable composition. In a case where the curable composition of the present invention is used, however, it is possible to obtain a uniform cured coating film. Specifically, use of the composition of the present invention makes it possible to obtain a uniform coating film even in a case where, due to the three-dimensional shape of the base material, the distance between the base material and the irradiation section varies by not less than 1 cm, not less than 3 cm, or not less than 5 cm.

In a case where an active energy ray curable composition is used as a pigment containing coating agent, a pigment contained in the active energy ray curable composition partially blocks an active energy ray. This may cause poor curing of the active energy ray curable composition. As a result, the active energy ray curable composition may not be cured at all or a resultant cured coating film may have a wrinkle, a crack, or the like. According to the curable composition of the present invention, however, it is possible to obtain a uniform coating film which does not have a wrinkle, a crack, or the like.

The base material is not particularly limited, and various base materials (described later) can be used.

The laminated product of the present invention can be suitably used for interior and exterior materials of information device terminals/home electric appliances, interior and exterior materials of vehicles, interior and exterior materials of buildings, exterior materials of furniture, and the like.

The active energy ray curable composition of the present invention can be suitably used, for example, for coating of buildings, home electric appliances, industrial equipment, and the like each of which is made of metal, ceramic, glass, cement, a ceramic base material, plastic, a film, a sheet, wood, paper, fiber, or the like. In particular, the active energy ray curable composition of the present invention can be suitably used for a base material such as a plastic (e.g., an acrylic resin, a polycarbonate resin, and a PET resin), a film, and a sheet, due to ease of irradiation with an active energy ray.

The present invention is not limited to the embodiments, but can be altered by a skilled person in the art within the scope of the claims. An embodiment derived from a proper combination of technical means each disclosed in a different embodiment is also encompassed in the technical scope of the present invention. Further, it is possible to form a new technical feature by combining the technical means disclosed in the respective embodiments.

The present invention can also be arranged as below.

[1] An active energy ray curable composition containing a copolymer (A) and a photo-acid generator (B), the copolymer (A) being obtained by reacting a cocondensate (a), having a polymerizable unsaturated group, with a polymerizable unsaturated monomer (b), the cocondensate (a) being obtained by hydrolyzing and condensing a silane compound (I), having a hydrolyzable silyl group, and a silane compound (II), having a hydrolyzable silyl group, the silane compound (I) being represented by the following general formula (I):

$$R^1\text{-}(SiR^2{}_a(OR^3)_{3-a}) \qquad (I)$$

wherein: $R^1$ represents a C1-C10 alkyl group terminally substituted by a 3,4-epoxycyclohexyl group; each $R^2$ independently represents a hydrogen atom or a monovalent hydrocarbon group selected from a C1-C10 alkyl group, a C6-C25 aryl group, and a C7-C12 aralkyl group; each $R^3$ independently represents a monovalent hydrocarbon group;

each $R^3$ represents a hydrogen atom or a C1-C10 alkyl group; and "a" represents an integer of 0 to 2,

the silane compound (II) being represented by the following general formula (II):

$$R^4\text{-}(SiR^2_a(OR^3)_{3-a}) \qquad (\qquad II)$$

wherein: $R^4$ is selected from a substituted C1-C10 alkyl group, a alkenyl group, and an unsubstituted or substituted aryl group each terminally having a polymerizable unsaturated group and each having no 3,4-epoxycyclohexyl group; each $R^2$ independently represents a hydrogen atom or a monovalent hydrocarbon group selected from a C1-C10 alkyl group, a C6-C25 aryl group, and a C7-C12 aralkyl group; each $R^3$ independently represents a hydrogen atom or a C1-C10 alkyl group; and "a" represents an integer of 0 to 2.

[2] The active energy ray curable composition as set forth in [1], wherein $R^1$ represents a β-(3,4-epoxycyclohexyl)ethyl group.

[3] The active energy ray curable composition as set forth in [1] or [2], wherein the cocondensate (a) has 0.1 to 1 polymerizable unsaturated group(s) per molecule.

[4] The active energy ray curable composition as set forth in any one of [1] through [3], wherein the polymerizable unsaturated monomer (b) is at least one kind of monomer selected from the group consisting of a monomer having a (meth)acryloyl group, a monomer having a vinyl group, a monomer having an aryl group, and a monomer having a styryl group.

[5] The active energy ray curable composition as set forth in any one of [1] through [4], wherein the polymerizable unsaturated monomer (b) contains a polymerizable unsaturated monomer having at least one or more kinds of hydrolyzable silyl groups.

[6] The active energy ray curable composition as set forth in any one of [1] through [5], wherein the active energy ray curable composition contains the photo-acid generator (B) in an amount of 0.01 parts by mass to 10 parts by mass relative to 100 parts by mass of the copolymer (A).

[7] The active energy ray curable composition as set forth in any one of [1] through [6], wherein the photo-acid generator (B) is an aromatic sulfonium salt or an aromatic iodonium salt.

[8] The active energy ray curable composition as set forth in [7], wherein a counter anion of the photo-acid generator (B) is a fluorophosphonate anion or a fluoroantimonate anion.

[9] The active energy ray curable composition as set forth in any one of [1] through [8], further including a pigment (C).

[10] The active energy ray curable composition as set forth in any one of [1] through [9], further including a photosensitizer (D).

[11] The active energy ray curable composition as set forth in [10], wherein the photosensitizer (D) is an anthracene derivative, a thioxanthone derivative, or a benzophenone derivative.

[12] A method of forming a cured coating film, the method including: applying, to a base material, an active energy ray curable composition recited in any one of [1] through [11]; and irradiating the active energy ray curable composition with an active energy ray, so that a cured film is formed.

[13] A cured product obtained by (i) applying, to a base material, an active energy ray curable composition recited in any one of [1] through [11] and (ii) irradiating the active energy ray curable composition with an active energy ray so that a cured film is formed.

[14] A laminated product in which a cured film made of an active energy ray curable composition recited in any one of [1] through [11] is formed on a surface of a base material.

Examples

The following description will discuss the present invention on the basis of Examples, but the present invention is not limited by the Examples.

In the Examples and in Comparative Examples, raw materials below were used.

○ Silane compound having a hydrolyzable silyl group

A-186: manufactured by Momentive Performance Materials Japan, LLC., (3-(3,4-epoxycyclohexyl)ethyltrimethoxysilane

A-187: manufactured by Momentive Performance Materials Japan, LLC., 3-glycidyloxypropyltrimethoxysilane

A-174: manufactured by Momentive Performance Materials Japan, LLC., y-methacryloxypropyltrimethoxysilane

o Neutral salt catalyst

Magnesium chloride: manufactured by Wako Pure Chemical Industries, Ltd., special grade

o Polymerizable unsaturated monomer

Methylmethacrylate: manufactured by Mitsubishi Rayon Co., Ltd.

Glycidyl (meth)acrylate: manufactured by Kishida Chemical Co., Ltd.

A-174: manufactured by Momentive Performance Materials Japan, LLC., y-methacryloxypropyltrimethoxysilane

o Polymerization initiator

2,2'-azobis(2-methylbutyronitrile): manufactured by Wako Pure Chemical Industries, Ltd.

2,2'-azobis(2,4-dimethylvaleronitrile): manufactured by Wako Pure Chemical Industries, Ltd.

o Solvent

Methyl isobutyl ketone: manufactured by Mitsubishi Chemical Corporation

Butyl acetate: manufactured by KH Neochem Co., Ltd.

o Dehydrator

Methyl orthoacetate: manufactured by Nippoh Chemicals Co., Ltd.

o Coating agent

U-6LPA: manufactured by Shin-Nakamura Chemical Co., Ltd., UV curable hard coating urethane acrylate

○ Photo-acid generator

CPI-101A: manufactured by San-Apro Ltd., propylene carbonate solution of triarylsulfonium SbF6 salt ○ Photo-radical generator

DAROCUR1173: manufactured by BASF Japan Ltd., photo-radical generator

IRGACURE819: manufactured by BASF Japan Ltd., photo-radical generator

○ Pigment and the like

MA-100: manufactured by Mitsubishi Chemical Corporation, carbon black pigment

DISPERBYK-2025: manufactured by BYK-Chemie Japan KK, pigment dispersant

BYK-300: manufactured by BYK-Chemie Japan KK, leveling agent

In the Examples and the Comparative Examples, physical properties were evaluated as below.

· Curing property (visual observation of appearance)

One (1) day after irradiation with an ultraviolet ray, an appearance of a coating film was visually observed so as to evaluate a curing property.

In Examples 1 through 6 and Comparative Examples 1 through 10, the curing property was evaluated by standards below.

Good: Uniform and smooth coating surface.
Poor: Nonuniform coating surface having a crack, a wrinkle, unevenness, and/or the like.

In Examples 7 through 24 and Comparative Examples 11 through 36, the curing property was evaluated by standards below.

Good: Uniform and smooth coating surface.
Unsatisfactory: Coating surface having no tuck, but having a wrinkle, shrinkage, and/or the like.
Poor: Not cured (coating surface in the form of liquid).

· Cross-cut adhesiveness test (adhesion test)

One (1) day after the irradiation, a cross-cut adhesiveness test (primary adhesiveness) was carried out in conformity with JIS K5600 with use of a lattice pattern having 1 mm intervals. Furthermore, adhesiveness (secondary adhesiveness) immediately after a test piece, having been immersed in water at 40°C for one (1) week, was taken out of the water was also evaluated.

· Alkali resistance

Seven days after the irradiation, a 0.1N sodium hydroxide aqueous solution was spotted on the coating film, and a droplet thus spotted was hermetically covered with a watch glass so that no moisture volatilized. After the coating film was left to stand at 55°C for 4 hours, the droplet was wiped off with use of absorbent cotton, and a state of the coating film was observed.

Good: No change.
Poor: A spot mark was left.

· Chemical resistance

Seven days after the irradiation, sunscreen cream (Coppertone SPF50) was dropped onto and spread over the coating film. After the coating film was left to stand at 55°C for 4 hours, the sunscreen cream was wiped off with use of absorbent cotton, and a state of the coating film was observed.

Good: No change.
Poor: Appearance abnormality (loss of gloss, discoloration,

a crack, a blister, and/or the like) was observed.

· Abrasion resistance

Seven days after the irradiation, with use of an eraser abrasion tester (manufactured by Mitsumoto Seisakusho KK), the coating film was rubbed 10 times with steel wool #0000 under a load of 200 g/cm$^2$. Then, how many scratches had been made on the coating film was visually observed so as to evaluate abrasion resistance.

Good: No scratch.
Unsatisfactory: 1 or more but less than 10 scratches.
Poor: 10 or more scratches.

· Weather resistance

An accelerated weathering test was carried out with use of a xenon arc lamp weatherometer [manufactured by Iwasaki Electric Co., Ltd.; model: XER-W75].

The appearance of the cured film having been subjected to the accelerated weathering test for 1,000 hours was visually observed, and weather resistance was evaluated by standards below.

Good: No change (crack, peeling, discoloration, decolorization, and/or the like) in appearance was observed.
Poor: Change (crack, peeling, discoloration, decolorization, and/or the like) in appearance was observed.

[Method of synthesizing cocondensate (a)]

(Synthesis Example 1)

Into a reactor vessel (e.g., a four-necked flask) equipped with a stirrer, a thermometer, and a reflux condenser, 100 parts by weight of A-186 [2-(3,4-epoxycyclohexyl)ethyltrimethoxysilane] serving as a silane compound, 5.3 parts by weight of A-174 [3-methacryloyloxypropyltrimethoxysilane] serving as a silane compound, 0.02 parts by weight of magnesium chloride serving as a catalyst, and 11.5 parts by weight of water were placed, and then reacted while being stirred at a reaction temperature of 105°C for 3 hours. Subsequently, the water was volatilized under reduced pressure with use of an evaporator so as to remove the water. A resultant solution was diluted with butyl acetate so as to have a concentration of 60%. A cocondensate solution (a-1) was thus obtained.
Table 1 shows a weight average molecular weight and the number of polymerizable unsaturated groups per molecule of the cocondensate solution (a-1) thus obtained.

(Synthesis Example 2)

A cocondensate solution (a-2) was obtained in a manner similar to that in Synthesis Example 1, except that (i) an amount of A-174 to be placed as a silane compound was changed to 8.2 parts by weight and (ii) an amount of water to be placed was changed to 11.8 parts by weight. Table 1 shows a weight average molecular weight and the number of polymerizable unsaturated groups per molecule of the cocondensate solution (a-2) thus obtained.

(Synthesis Example 3)

A cocondensate solution (a-3) was obtained in a manner similar to that in Synthesis Example 1, except that (i) an amount of A-174 to be placed as a silane compound was changed to 11.2 parts by weight and (ii) an amount of water to be placed was changed to 12.2 parts by weight. Table 1 shows a weight average molecular weight and the number of polymerizable unsaturated groups per molecule of the cocondensate solution (a-3) thus obtained.

(Synthesis Example 4)

Into a reactor vessel (e.g., a four-necked flask) equipped with a stirrer, a thermometer, and a reflux condenser, 100 parts by weight of A-187[3-glycidyloxypropyltrimethoxysilane] serving as a silane compound, 3.3 parts by weight of A-174 [3-methacryloyloxypropyltrimethoxysilane] serving as a silane compound, 0.05 parts by weight of magnesium chloride serving as a catalyst, and 11.8 parts by weight of water were placed, and then reacted while being stirred at a reaction temperature of 105°C for 7 hours. Subsequently, the water was volatilized under reduced pressure with use of an evaporator so as to remove the water. A resultant solution was diluted with butyl acetate so as to have a concentration of 60%. A cocondensate solution (a-4) was thus obtained.
Table 2 shows a weight average molecular weight and the number of polymerizable unsaturated groups per molecule of the cocondensate solution (a-4) thus obtained.

(Synthesis Example 5)

A cocondensate solution (a-5) was obtained in a manner similar to that in Synthesis Example 4, except that (i) an amount of A-174 to be placed as a silane compound was changed to 5.5 parts by weight and (ii) an amount of water to be placed was changed to 12.0 parts by weight. Table 2 shows a weight average molecular weight and the number of polymerizable unsaturated groups per molecule of the cocondensate solution (a-5) thus obtained.

(Synthesis Example 6)

A cocondensate solution (a-6) was obtained in a manner similar to that in Synthesis Example 4, except that (i) an amount of A-174 to be placed as a silane compound was changed to 7.9 parts by weight and (ii) an amount of water to be placed was changed to 12.3 parts by weight. Table 2 shows a weight average molecular weight and the number of polymerizable unsaturated groups per molecule of the cocondensate solution (a-6) thus obtained.

(Synthesis Example 7)

A cocondensate solution (a-7) was obtained in a manner similar to that in Synthesis Example 4, except that (i) an amount of A-174 to be placed as a silane compound was changed to 11.7 parts by weight, (ii) an amount of magnesium chloride to be placed was changed to 0.06 parts by weight, and (iii) an amount of water to be placed was changed to 12.7 parts by weight. Table 2 shows a weight average molecular weight and the number of polymerizable unsaturated groups per molecule of the cocondensate solution (a-7) thus obtained.

(Synthesis Example 8)

A cocondensate solution (a-8) was obtained in a manner similar to that in Synthesis Example 4, except that (i) an amount of A-174 to be placed as a silane compound was changed to 17.1 parts by weight, (ii) an amount of magnesium chloride to be placed was changed to 0.06 parts by weight, and (iii) an amount of water to be placed was changed to 13.3 parts by weight. Table 2 shows a weight average molecular weight and the number of polymerizable unsaturated groups per molecule of the cocondensate solution (a-8) thus obtained.

(Synthesis Example 9)

A cocondensate solution (a-9) was obtained in a manner similar to that in Synthesis Example 4, except that (i) an amount of A-174 to be placed as a silane compound was changed to 0.5 parts by weight, (ii) an amount of magnesium chloride to be placed was changed to 0.05 parts by weight, and (iii) an amount of water to be placed was changed to 11.5 parts by weight. Table 2 shows a weight average molecular weight and the number of polymerizable unsaturated groups per molecule of the cocondensate solution (a-9) thus obtained.

(Synthesis Example 10)

A cocondensate solution (a-10) was obtained in a manner similar to that in Synthesis Example 4, except that (i) an amount of A-174 to be placed as a silane compound was changed to 45.0 parts by weight, (ii) an amount of magnesium chloride to be placed was changed to 0.07 parts by weight, and (iii) an amount of water to be placed was changed to 16.3 parts by weight. Table 2 shows a weight average molecular weight and the number of polymerizable unsaturated groups per molecule of the cocondensate solution (a-10) thus obtained.

[Table 1]

|  |  | Synthesis Example | | |
|---|---|---|---|---|
|  |  | a-1 | a-2 | a-3 |
| A-186 | parts by weight | 100 | 100 | 100 |
| A-174 | parts by weight | 5.3 | 8.2 | 11.2 |
| Water | parts by weight | 11.5 | 11.8 | 12.2 |
| Magnesium chloride | parts by weight | 0.02 | 0.02 | 0.02 |
| Weight average molecular weight | - | 2,300 | 2,300 | 2,400 |
| The number of polymerizable unsaturated groups per molecule | - | 0.61 | 0.75 | 1.0 |
| The number of epoxycyclohexyl groups per molecule | - | 12.4 | 12.2 | 12.5 |

[Table 2]

|  | Synthesis Example | | | | | | |
|---|---|---|---|---|---|---|---|
|  | a-4 | a-5 | a-6 | a-7 | a-8 | a-9 | a-10 |
| A-187 | 100.0 | 100.0 | 100.0 | 100.0 | 100.0 | 100.0 | 100.0 |

(continued)

|  | Synthesis Example | | | | | | |
| --- | --- | --- | --- | --- | --- | --- | --- |
|  | a-4 | a-5 | a-6 | a-7 | a-8 | a-9 | a-10 |
| A-174 | 3.3 | 5.5 | 7.9 | 11.7 | 17.1 | 0.5 | 45.0 |
| Water | 11.8 | 12.0 | 12.3 | 12.7 | 13.3 | 11.5 | 16.3 |
| Magnesium chloride | 0.05 | 0.05 | 0.05 | 0.06 | 0.06 | 0.05 | 0.07 |
| Weight average molecular weight | 2,900 | 3,300 | 3,600 | 3,500 | 3,600 | 3,000 | 4,000 |
| The number of polymerizable unsaturated groups per molecule | 0.5 | 1.0 | 1.5 | 2.0 | 3.0 | 0.09 | 7.0 |

Note that, in Table 2, the numerical values of A-187, A-174, water, and magnesium chloride are each expressed in units of parts by weight.

(Examples 1 through 24 and Comparative Examples 1 through 36)

[Production of copolymers (A-1 to A-4)]

Methyl isobutyl ketone in an amount shown in Table 3 was placed into a reactor vessel equipped with a stirrer, a thermometer, a reflux condenser, a nitrogen gas inlet tube, and a dropping funnel. A temperature in the reactor vessel was raised to 75°C while a nitrogen gas was being introduced into the reactor vessel. Subsequently, a mixture (a) of a cocondensate (a), polymerizable unsaturated monomers, and methyl isobutyl ketone of kinds and in amounts shown in Table 3 was dropped into the reactor vessel from the dropping funnel at a constant rate over 5 hours.

Next, a mixed solution (b) of 2,2'-azobis(2-methylbutyronitrile), serving as an initiator, and methyl isobutyl ketone in amounts shown in Table 3 was dropped into the reactor vessel at a constant rate over 1 hour. Subsequently, a resultant solution was stirred at 75°C for 2 hours, and was then cooled to a room temperature. Finally, methyl orthoacetate, serving as a dehydrator, in an amount shown in Table 3 was added to the solution, and the solution thus obtained was stirred. Each of copolymers (A-1 to A-4) was thus synthesized.

Table 3 shows a solid content concentration and a weight average molecular weight of each of the copolymers (A-1 to A-4) thus obtained. Note that the weight average molecular weight was measured by GPC. The copolymers (A-1 to A-4) were each diluted once with a polymerization solvent so as to have a solid content concentration of 50%, before a subsequent blending was carried out.

[Table 3]

| Components | | | A-1 | A-2 | A-3 | A-4 |
| --- | --- | --- | --- | --- | --- | --- |
| Mixture (a) | Cocondensate (a) | a-1 | 80 | | | |
| | | a-2 | | 80 | | |
| | | a-3 | | | 80 | |
| | Polymerizable unsaturated monomer | methylmethacrylate | 10 | 10 | 10 | 50 |
| | | y-methacryloxypropyl trimethoxysilane | 10 | 10 | 10 | 50 |
| | Solvent | methyl isobutyl ketone | 44 | 44 | 44 | 44 |
| Solvent | | methyl isobutyl ketone | 50 | 50 | 50 | 50 |
| Mixed solution (b) | Initiator | 2,2'-azobis (2-methylbutyronitrile) | 1.5 | 4.0 | 6.0 | 0.7 |
| | Solvent | methyl isobutyl ketone | 27.0 | 30.0 | 32.5 | 26.1 |
| (c) | Dehydrator | methyl orthoacetate | 3.0 | 3.0 | 3.0 | 3.0 |

(continued)

| Components | | A-1 | A-2 | A-3 | A-4 |
|---|---|---|---|---|---|
| Properties of copolymer | Weight average molecular weight | 90,000 | 100,000 | 120,000 | 15,000 |
| | Solid content concentration (%) | 45.0 | 45.0 | 45.0 | 45.0 |

[Production of copolymers (A-5 to A-8)]

A solvent (butyl acetate) and a cocondensate (a) in amounts shown in Table 4 were placed into a reactor vessel equipped with a stirrer, a thermometer, a reflux condenser, a nitrogen gas inlet tube, and a dropping funnel. A temperature of a resultant solution was raised to 80°C while a nitrogen gas was being introduced into the reactor vessel. Subsequently, a mixture (a) of polymerizable unsaturated monomers, an initiator, butyl acetate of kinds and in amounts shown in Table 4 was dropped into the reactor vessel from the dropping funnel at a constant rate over 3 hours.

Next, a mixed solution (b) of an initiator and butyl acetate in amounts shown in Table 4 was dropped into the reactor vessel at a constant rate over 1 hour. Subsequently, a resultant solution was stirred at 80°C for 2 hours, and was then cooled to a room temperature. Finally, methyl orthoacetate, serving as a dehydrator, in an amount shown in Table 4 was added to the solution, and the solution thus obtained was stirred. Each of copolymers (A-5 to A-8) was thus synthesized.

Table 4 shows a solid content concentration and a weight average molecular weight of each of the copolymers (A-5 to A-8) thus obtained. Note that the weight average molecular weight was measured by GPC. The copolymers (A-5 to A-8) were each diluted once with a polymerization solvent so as to have a solid content concentration of 50%, before a subsequent blending was carried out.

[Production of copolymers (A-9 to A-16)]

A solvent (butyl acetate) in an amount shown in Table 5 was placed into a reactor vessel equipped with a stirrer, a thermometer, a reflux condenser, a nitrogen gas inlet tube, and a dropping funnel. A temperature in the reactor vessel was raised to 80°C while a nitrogen gas was being introduced into the reactor vessel. Subsequently, a mixture (a) of a cocondensate (a), polymerizable unsaturated monomers, an initiator, and butyl acetate of kinds and in amounts shown in Table 5 was dropped into the reactor vessel from the dropping funnel at a constant rate over 5 hours.

Next, a mixed solution (b) of an initiator, and butyl acetate in amounts shown in Table 5 was dropped into the reactor vessel at a constant rate over 1 hour. Subsequently, a resultant solution was stirred at 80°C for 2 hours, and was then cooled to a room temperature. Finally, methyl orthoacetate, serving as a dehydrator, in an amount shown in Table 5 was added to the solution, and the solution thus obtained was stirred. Each of copolymers (A-9 to A-16) was thus synthesized.

Table 5 shows a solid content concentration and a weight average molecular weight of each of the copolymers (A-9 to A-14 and A-16) thus obtained. Note that the weight average molecular weight was measured by GPC. The copolymers (A-9 to A-14 and A-16) were each diluted once with a polymerization solvent so as to have a solid content concentration of 50%, before a subsequent blending was carried out. The copolymer (A-15) gelated during a polymerization reaction.

[Table 4]

| Components | | | | A-5 | A-6 | A-7 | A-8 | A-9 | A-10 |
|---|---|---|---|---|---|---|---|---|---|
| Solvent | | | butyl acetate | 30.0 | 30.0 | 30.0 | 30.0 | 30.0 | 30.0 |
| Cocondensate (a) | | | a-1 | 133.4 | | | | | |
| | | | a-2 | | 133.4 | | | | |
| | | | a-3 | | | 133.4 | | | |
| | | | a-4 | | | | 116.7 | | |
| Mixture (a) | Cocondensate (a) | | a-4 | | | | | 133.4 | |
| | | | a-5 | | | | | | 133.4 |
| | | | a-6 | | | | | | |
| | | | a-7 | | | | | | |
| | | | a-8 | | | | | | |
| | | | a-9 | | | | | | |
| | | | a-10 | | | | | | |
| | Polymerizable unsaturated monomer | | methyl methacrylate | 10.0 | 10.0 | 10.0 | 15.0 | 10.0 | 10.0 |
| | | | y-methacryloxy propyltrimethoxy silane | 10.0 | 10.0 | 10.0 | 15.0 | | |
| | | | glycidyl (meth)acrylate | | | | | 10.0 | 10.0 |
| | Initiator | | 2,2'-azobis(2,4-dimethyl valeronitrile) | 1.5 | 4.0 | 6.0 | 1.5 | 1.0 | 4.5 |
| | Solvent | | butyl acetate | 5.0 | 5.0 | 5.0 | 5.0 | 5.0 | 5.0 |
| Mixed solution (b) | Initiator | | 2,2'-azobis (2,4-dimethyl valeronitrile) | 0.5 | 0.5 | 0.5 | 0.5 | 0.5 | 0.5 |
| | Solvent | | butyl acetate | 10.7 | 13.2 | 15.2 | 17.3 | 10.2 | 13.7 |
| (c) | Dehydrator | | methyl orthoacetate | 3.0 | 3.0 | 3.0 | 3.0 | 3.0 | 3.0 |
| Properties of copolymer | | | Weight average molecular weight | 90,000 | 100,000 | 120,000 | 100,000 | 23,000 | 28,000 |
| | | | Solid content concentration (%) | 50.0 | 50.0 | 50.0 | 50.0 | 50.0 | 50.0 |

EP 3 202 811 A1

[Table 5]

| Components | | | A-11 | A-12 | A-13 | A-14 | A-15 | A-16 |
|---|---|---|---|---|---|---|---|---|
| Solvent | | butyl acetate | 30.0 | 30.0 | 30.0 | 30.0 | 80.0 | 50.0 |
| Cocondensate (a) | | a-1 | | | | | | |
| | | a-2 | | | | | | |
| | | a-3 | | | | | | |
| | | a-4 | | | | | | |
| Mixture (a) | Cocondensate (a) | a-4 | | | | | | |
| | | a-5 | | | | | | |
| | | a-6 | 133.4 | | | | | |
| | | a-7 | | 133.4 | | | | |
| | | a-8 | | | 133.4 | | | |
| | | a-9 | | | | 133.4 | | |
| | | a-10 | | | | | 133.4 | |
| | Polymerizable unsaturated monomer | methyl methacrylate | 10.0 | 10.0 | 10.0 | 10.0 | 10.0 | 50.0 |
| | | y-methacryloxy propyltrimethoxy silane | | | | | | 50.0 |
| | | glycidyl (meth)acrylate | 10.0 | 10.0 | 10.0 | 10.0 | 10.0 | |
| | Initiator | 2,2'-azobis(2,4-dimethyl valeronitrile) | 4.8 | 6.0 | 8.0 | 0.5 | 11.0 | 0.7 |
| | Solvent | butyl acetate | 5.0 | 5.0 | 5.0 | 5.0 | 70.0 | 22.0 |
| Mixed solution (b) | Initiator | 2,2'-azobis (2,4-dimethyl valeronitrile) | 0.5 | 0.5 | 0.5 | 0.5 | 0.5 | 0.5 |
| | Solvent | butyl acetate | 14.0 | 15.2 | 19.2 | 9.7 | 52.0 | 25.0 |
| (c) | Dehydrator | methyl orthoacetate | 3.0 | 3.0 | 3.0 | 3.0 | 3.0 | 3.0 |
| Properties of copolymer | | Weight average molecular weight | 106,000 | 276,000 | 290,000 | 8,700 | Gelification | 15,000 |
| | | Solid content concentration (%) | 50.0 | 50.0 | 50.0 | 50.0 | | 50.0 |

[Preparation of coating resin composition]

Components were blended as shown in Table 6 (amounts of the components are expressed in units of parts by weight) to prepare transparent coating agent resin compositions.

[Table 6]

| Components | | Ex 1 | Ex 2 | Ex 3 | Comp Ex 1 | Comp Ex 2 | Comp Ex 3 | Comp Ex 4 | Comp Ex 5 |
|---|---|---|---|---|---|---|---|---|---|
| Copolymer (A) | A-1 | 100 | | | | | | | |
| | A-2 | | 100 | | | | | | |
| | A-3 | | | 100 | | | | | |
| | A-4 | | | | 100 | | | | |
| Cocondensate (a) | a-1 | | | | | 50 | | | |
| | a-2 | | | | | | 50 | | |
| | a-3 | | | | | | | 50 | |
| Urethane acrylate | U-6LPA | | | | | | | | 50 |
| Photo-acid generator (B) | CPI-101A | 1.5 | 1.5 | 1.5 | 1.5 | 1.5 | 1.5 | 1.5 | |
| Photo-radical generator | DAROCUR1173 | | | | | | | | 1.0 |
| | IRGACURE819 | | | | | | | | 0.5 |
| Diluent | butyl acetate/diacetone alcohol = 80/20 | 134.5 | 134.5 | 134.5 | 134.5 | 184.5 | 184.5 | 184.5 | 184.5 |

| Curing condition | | | UV curing (800 mJ/cm$^2$) | | | | | | | |
|---|---|---|---|---|---|---|---|---|---|---|
| Properties | Curing property | Irradiated portion | Good | Good | Good | Good | Good | Good | Good | Good |
| | | Shielded portion | Good | Good | Good | Good | Poor | Poor | Poor | Not cured |
| | Irradiated portion adhesion | First | 100/100 | 100/100 | 100/100 | 100/100 | 100/100 | 100/100 | 100/100 | 100/100 |
| | | Second | 100/100 | 100/100 | 100/100 | 100/100 | 100/100 | 100/100 | 100/100 | 100/100 |
| | Shielded portion adhesion | First | 100/100 | 100/100 | 100/100 | 100/100 | 100/100 | 100/100 | 100/100 | Un-Unevalu-able |
| | | Second | 100/100 | 100/100 | 100/100 | 100/100 | 100/100 | 100/100 | 100/100 | Unevalu-able |
| | Alkali resistance | Irradiated portion | Good | Good | Good | Good | Good | Good | Good | Good |
| | | Shielded portion | Good | Good | Good | Good | Good | Good | Good | Unevaluable |
| | Abrasion resistance | Irradiated portion | Good | Good | Good | Poor | Good | Good | Good | Good |
| | | Shielded portion | Good | Good | Good | Poor | Unsatisfactory | Unsatisfactory | Unsatisfactory | Unevalu-able |

EP 3 202 811 A1

Meanwhile, components were blended as shown in Table 7 (amounts of the components are expressed in units of parts by weight) to prepare pigment containing coating agent resin compositions.

[Table 7]

| Components | | | Ex 4 | Ex 5 | Ex 6 | Comp Ex 6 | Comp Ex 7 | Comp Ex 8 | Comp Ex 9 | Comp Ex 10 |
|---|---|---|---|---|---|---|---|---|---|---|
| Copolymer (A) | | A-1 | 100 | | | | | | | |
| | | A-2 | | 100 | | | | | | |
| | | A-3 | | | 100 | | | | | |
| | | A-4 | | | | 100 | | | | |
| Cocondensate (a) | | a-1 | | | | | 50 | | | |
| | | a-2 | | | | | | 50 | | |
| | | a-3 | | | | | | | 50 | |
| Urethane acrylate | | U-6LPA | | | | | | | | 50 |
| Photo-acid generator (B) | | CPI-101A | 1.5 | 1.5 | 1.5 | 1.5 | 1.5 | 1.5 | 1.5 | |
| Photo-radical generator | | DAROCUR1173 | | | | | | | | 1.0 |
| | | IRGACURE819 | | | | | | | | 0.5 |
| Pigment (C) | | MA-100 | 2.0 | 2.0 | 2.0 | 2.0 | 2.0 | 2.0 | 2.0 | 2.0 |
| Pigment dispersant | | DISPERBYK-2025 | 0.8 | 0.8 | 0.8 | 0.8 | 0.8 | 0.8 | 0.8 | 0.8 |
| Diluent | | butyl acetate/diacetone alcohol = 80/20 | 144.5 | 144.5 | 144.5 | 144.5 | 194.5 | 194.5 | 194.5 | 194.5 |
| Curing condition | | | UV curing (800mJ/cm$^2$) | | | | | | | |
| Properties | Curing | property | Good | Good | Good | Poor | Poor | Poor | Poor | Poor |
| | Adhesion | First | 100/100 | 100/100 | 100/100 | 100/100 | 100/100 | 100/100 | 100/100 | 100/100 |
| | | Second | 100/100 | 100/100 | 100/100 | 100/100 | 100/100 | 100/100 | 100/100 | 100/100 |
| | Alkali resistance | | Good | Good | Good | Good | Good | Good | Good | Poor |
| | Abrasion resistance | | Good | Good | Good | Poor | Good | Good | Good | Unsatisfactory |
| | Weather resistance | | Good | Good | Good | Good | Good | Good | Good | Poor |

Components were blended as shown in each of Tables 8 through 10 (amounts of the components are expressed in units of parts by weight) to prepare transparent coating agent resin compositions.

[Table 8]

| Components | | Ex 7 | Ex 8 | Ex 9 | Ex 10 | Ex 11 | Ex 12 | Ex 13 |
|---|---|---|---|---|---|---|---|---|
| Copolymer (A) | A-5 | 100 | | | | | | |
| | A-6 | | 100 | | | | | |
| | A-7 | | | 100 | | | | |
| | A-8 | | | | 100 | | | |
| | A-9 | | | | | 100 | | |
| | A-10 | | | | | | 100 | |
| | A-11 | | | | | | | 100 |
| | A-12 | | | | | | | |
| | A-13 | | | | | | | |
| | A-14 | | | | | | | |
| | A-16 | | | | | | | |
| Cocondensate (a) | a-1 | | | | | | | |
| | a-2 | | | | | | | |
| | a-3 | | | | | | | |
| | a-4 | | | | | | | |
| | a-5 | | | | | | | |
| | a-6 | | | | | | | |
| | a-7 | | | | | | | |
| | a-8 | | | | | | | |
| | a-9 | | | | | | | |
| | a-10 | | | | | | | |
| Urethane acrylate | U-6LPA | | | | | | | |
| Photo-acid generator (B) | CPI-101A | 1.5 | 1.5 | 1.5 | 1.5 | 1.5 | 1.5 | 1.5 |
| Photo-radical generator | DAROCUR1173 | | | | | | | |
| | IRGACURE819 | | | | | | | |

(continued)

| Components | | | Ex 7 | Ex 8 | Ex 9 | Ex 10 | Ex 11 | Ex 12 | Ex 13 |
|---|---|---|---|---|---|---|---|---|---|
| Leveling agent | BYK-300 | | 0.5 | 0.5 | 0.5 | 0.5 | 0.5 | 0.5 | 0.5 |
| Diluent | butyl acetate | | 70.5 | 70.5 | 70.5 | 70.5 | 70.5 | 70.5 | 70.5 |
| | butyl acetate/diacetone alcohol = 80/20 | | 62.8 | 62.8 | 62.8 | 62.8 | 62.8 | 62.8 | 62.8 |
| Curing condition | | | UV curing (800 mJ/cm²) | | | | | | |
| Properties | Curing property | Irradiated portion | Good | Good | Good | Good | Good | Good | Good |
| | | Shielded portion | Good | Good | Good | Good | Good | Good | Good |
| | Irradiated portion adhesion | First | 100/100 | 100/100 | 100/100 | 100/100 | 100/100 | 100/100 | 100/100 |
| | | Second | 100/100 | 100/100 | 100/100 | 100/100 | 100/100 | 100/100 | 100/100 |
| | Shielded portion adhesion | First | 100/100 | 100/100 | 100/100 | 100/100 | 100/100 | 100/100 | 100/100 |
| | | Second | 100/100 | 100/100 | 100/100 | 100/100 | 100/100 | 100/100 | 100/100 |
| | Chemical resistance | Irradiated portion | Good | Good | Good | Good | Good | Good | Good |
| | | Shielded portion | Good | Good | Good | Good | Good | Good | Good |
| | Abrasion resistance | Irradiated portion | Good | Good | Good | Good | Good | Good | Good |
| | | Shielded portion | Good | Good | Good | Good | Good | Good | Good |

[Table 9]

| Components | | Ex 14 | Ex 15 | Comp Ex 11 | Comp Ex 12 | Comp Ex 13 | Comp Ex 14 | Comp Ex 15 | Comp Ex 16 |
|---|---|---|---|---|---|---|---|---|---|
| Copolymer (A) | A-5 | | | | | | | | |
| | A-6 | | | | | | | | |
| | A-7 | | | | | | | | |
| | A-8 | | | | | | | | |
| | A-9 | | | | | | | | |
| | A-10 | | | | | | | | |
| | A-11 | | | | | | | | |
| | A-12 | 100 | | | | | | | |
| | A-13 | | 100 | | | | | | |
| | A-14 | | | 100 | | | | | |
| | A-16 | | | | 100 | | | | |
| Cocondensate (a) | a-1 | | | | | 100 | | | |
| | a-2 | | | | | | 100 | | |
| | a-3 | | | | | | | 100 | |
| | a-4 | | | | | | | | 100 |
| | a-5 | | | | | | | | |
| | a-6 | | | | | | | | |
| | a-7 | | | | | | | | |
| | a-8 | | | | | | | | |
| | a-9 | | | | | | | | |
| | a-10 | | | | | | | | |
| Urethane acrylate | U-6LPA | | | | | | | | |
| Photo-acid generator (B) | CPI-101A | 1.5 | 1.5 | 1.5 | 1.8 | 1.8 | 1.8 | 1.8 | 1.8 |

(continued)

| Components | | Ex 14 | Ex 15 | Comp Ex 11 | Comp Ex 12 | Comp Ex 13 | Comp Ex 14 | Comp Ex 15 | Comp Ex 16 |
|---|---|---|---|---|---|---|---|---|---|
| Photo-radical generator | DAROCUR1173 | | | | | | | | |
| | IRGACURE819 | | | | | | | | |
| Leveling agent | BYK-300 | 0.5 | 0.5 | 0.5 | 0.6 | 0.6 | 0.6 | 0.6 | 0.6 |
| Diluent | butyl acetate | 70.5 | 70.5 | 70.5 | 104.6 | 104.6 | 104.6 | 104.6 | 104.6 |
| | butyl acetate/diacetone alcohol = 80/20 | 62.8 | 62.8 | 62.8 | 75.3 | 75.3 | 75.3 | 75.3 | 75.3 |
| Curing condition | | UV curing (800 mJ/cm$^2$) | | | | | | | |
| Properties | Curing property | Irradiated portion | Good | Good | Good | Good | Good | Good | Good | Good |
| | | Shielded portion | Good | Good | Unsatisfactory | Good | Unsatisfactory | Unsatisfactory | Unsatisfactory | Unsatisfactory |
| | Irradiated portion adhesion | First | 100/100 | 100/100 | 100/100 | 100/100 | 100/100 | 100/100 | 100/100 | 100/100 |
| | | Second | 100/100 | 100/100 | 100/100 | 100/100 | 100/100 | 100/100 | 100/100 | 100/100 |
| | Shielded portion adhesion | First | 100/100 | 100/100 | 100/100 | 100/100 | 100/100 | 100/100 | 100/100 | 100/100 |
| | | Second | 100/100 | 100/100 | 100/100 | 100/100 | 100/100 | 100/100 | 100/100 | 100/100 |
| | Chemical resistance | Irradiated portion | Good | Good | Good | Good | Good | Good | Good | Good |
| | | Shielded portion | Good | Good | Good | Good | Good | Good | Good | Good |
| | Abrasion resistance | Irradiated portion | Good | Good | Good | Poor | Good | Good | Good | Good |
| | | Shielded portion | Good | Good | Unsatisfactory | Poor | Unsatisfactory | Unsatisfactory | Unsatisfactory | Unsatisfactory |

[Table 10]

| Components | | Comp Ex 17 | Comp Ex 18 | Comp Ex 19 | Comp Ex 20 | Comp Ex 21 | Comp Ex 22 | Comp Ex 23 |
|---|---|---|---|---|---|---|---|---|
| Copolymer (A) | A-5 | | | | | | | |
| | A-6 | | | | | | | |
| | A-7 | | | | | | | |
| | A-8 | | | | | | | |
| | A-9 | | | | | | | |
| | A-10 | | | | | | | |
| | A-11 | | | | | | | |
| | A-12 | | | | | | | |
| | A-13 | | | | | | | |
| | A-14 | | | | | | | |
| | A-16 | | | | | | | |
| Cocondensate (a) | a-1 | | | | | | | |
| | a-2 | | | | | | | |
| | a-3 | | | | | | | |
| | a-4 | | | | | | | |
| | a-5 | 100 | | | | | | |
| | a-6 | | 100 | | | | | |
| | a-7 | | | 100 | | | | |
| | a-8 | | | | 100 | | | |
| | a-9 | | | | | 100 | | |
| | a-10 | | | | | | 100 | |
| Urethane acrylate | U-6LPA | | | | | | | 50 |
| Photo-acid generator (B) | CPI-101A | 1.8 | 1.8 | 1.8 | 1.8 | 1.8 | 1.8 | |

| Components | | Comp Ex 17 | Comp Ex 18 | Comp Ex 19 | Comp Ex 20 | Comp Ex 21 | Comp Ex 22 | Comp Ex 23 |
|---|---|---|---|---|---|---|---|---|
| Photo-radical generator | DAROCUR1173 | | | | | | | 1.0 |
| | IRGACURE819 | | | | | | | 0.5 |
| Leveling agent | BYK-300 | 0.6 | 0.6 | 0.6 | 0.6 | 0.6 | 0.6 | 0.5 |
| Diluent | butyl acetate | 104.6 | 104.6 | 104.6 | 104.6 | 104.6 | 104.6 | 115.5 |
| | butyl acetate/diacetone alcohol = 80/20 | 75.3 | 75.3 | 75.3 | 75.3 | 75.3 | 75.3 | 61.0 |
| Curing condition | | UV curing (800 mJ/cm$^2$) | | | | | | |
| Properties | Curing property — Irradiated portion | Good | Good | Good | Good | Good | Good | Good |
| | Curing property — Shielded portion | Unsatisfactory | Unsatisfactory | Unsatisfactory | Unsatisfactory | Unsatisfactory | Unsatisfactory | Poor |
| | Irradiated portion adhesion — First | 100/100 | 100/100 | 100/100 | 100/100 | 100/100 | 100/100 | 100/100 |
| | Irradiated portion adhesion — Second | 100/100 | 100/100 | 100/100 | 100/100 | 100/100 | 100/100 | 100/100 |
| | Shielded portion adhesion — First | 100/100 | 100/100 | 100/100 | 100/100 | 100/100 | 100/100 | Unevaluable |
| | Shielded portion adhesion — Second | 100/100 | 100/100 | 100/100 | 100/100 | 100/100 | 100/100 | Unevaluable |
| | Chemical resistance — Irradiated portion | Good | Good | Good | Good | Good | Good | Good |
| | Chemical resistance — Shielded portion | Good | Good | Good | Good | Good | Good | Unevaluable |
| | Abrasion resistance — Irradiated portion | Good | Good | Good | Good | Good | Good | Good |
| | Abrasion resistance — Shielded portion | Unsatisfactory | Unsatisfactory | Unsatisfactory | Unsatisfactory | Unsatisfactory | Unsatisfactory | Unevaluable |

Meanwhile, components were blended as shown in each of Tables 11 through 13 (amounts of the components are expressed in units of parts by weight) to prepare pigment containing coating agent resin compositions.

[Table 11]

| Components | | Ex 16 | Ex 17 | Ex 18 | Ex 19 | Ex 20 | Ex 21 | Ex 22 | Ex 23 |
|---|---|---|---|---|---|---|---|---|---|
| Copolymer (A) | A-5 | 100 | | | | | | | |
| | A-6 | | 100 | | | | | | |
| | A-7 | | | 100 | | | | | |
| | A-8 | | | | 100 | | | | |
| | A-9 | | | | | 100 | | | |
| | A-10 | | | | | | 100 | | |
| | A-11 | | | | | | | 100 | |
| | A-12 | | | | | | | | 100 |
| | A-13 | | | | | | | | |
| | A-14 | | | | | | | | |
| | A-16 | | | | | | | | |
| Cocondensate (a) | a-1 | | | | | | | | |
| | a-2 | | | | | | | | |
| | a-3 | | | | | | | | |
| | a-4 | | | | | | | | |
| | a-5 | | | | | | | | |
| | a-6 | | | | | | | | |
| | a-7 | | | | | | | | |
| | a-8 | | | | | | | | |
| | a-9 | | | | | | | | |
| | a-10 | | | | | | | | |
| Urethane acrylate | U-6LPA | | | | | | | | |
| Photo-acid generator (B) | CPI-101A | 1.5 | 1.5 | 1.5 | 1.5 | 1.5 | 1.5 | 1.5 | 1.5 |
| Photo-radical generator | DAROCUR1173 | | | | | | | | |
| | IRGACURE819 | | | | | | | | |

(continued)

| Components | | Ex 16 | Ex 17 | Ex 18 | Ex 19 | Ex 20 | Ex 21 | Ex 22 | Ex 23 |
|---|---|---|---|---|---|---|---|---|---|
| Pigment (C) | MA-100 | 2.0 | 2.0 | 2.0 | 2.0 | 2.0 | 2.0 | 2.0 | 2.0 |
| Pigment dispersant | DISPERBYK-2025 | 0.8 | 0.8 | 0.8 | 0.8 | 0.8 | 0.8 | 0.8 | 0.8 |
| Leveling agent | BYK-300 | 0.5 | 0.5 | 0.5 | 0.5 | 0.5 | 0.5 | 0.5 | 0.5 |
| Diluent | butyl acetate | 76.4 | 76.4 | 76.4 | 76.4 | 76.4 | 76.4 | 76.4 | 76.4 |
| | butyl acetate/diacetone alcohol = 80/20 | 66.0 | 66.0 | 66.0 | 66.0 | 66.0 | 66.0 | 66.0 | 66.0 |
| Curing condition | | UV curing (800 mJ/cm$^2$) | | | | | | | |
| Properties | Curing property | Good | Good | Good | Good | Good | Good | Good | Good |
| | Adhesion First | 100/100 | 100/100 | 100/100 | 100/100 | 100/100 | 100/100 | 100/100 | 100/100 |
| | Adhesion Second | 100/100 | 100/100 | 100/100 | 100/100 | 100/100 | 100/100 | 100/100 | 100/100 |
| | Chemical resistance | Good | Good | Good | Good | Good | Good | Good | Good |
| | Abrasion resistance | Good | Good | Good | Good | Good | Good | Good | Good |

[Table 12]

| Components | | Ex 24 | Comp Ex 24 | Comp Ex 25 | Comp Ex 26 | Comp Ex 27 | Comp Ex 28 | Comp Ex 29 |
|---|---|---|---|---|---|---|---|---|
| Copolymer (A) | A-5 | | | | | | | |
| | A-6 | | | | | | | |
| | A-7 | | | | | | | |
| | A-8 | | | | | | | |
| | A-9 | | | | | | | |
| | A-10 | | | | | | | |
| | A-11 | | | | | | | |
| | A-12 | | | | | | | |
| | A-13 | 100 | | | | | | |
| | A-14 | | 100 | | | | | |
| | A-16 | | | 100 | | | | |
| Cocondensate (a) | a-1 | | | | 100 | | | |
| | a-2 | | | | | 100 | | |
| | a-3 | | | | | | 100 | |
| | a-4 | | | | | | | 100 |
| | a-5 | | | | | | | |
| | a-6 | | | | | | | |
| | a-7 | | | | | | | |
| | a-8 | | | | | | | |
| | a-9 | | | | | | | |
| | a-10 | | | | | | | |
| Urethane acrylate | U-6LPA | | | | | | | |
| Photo-acid generator (B) | CPI-101A | 1.5 | 1.5 | 1.8 | 1.8 | 1.8 | 1.8 | 1.8 |
| Photo-radical | DAROCUR1173 | | | | | | | |
| generator | IRGACURE819 | | | | | | | |

(continued)

| Components | | Ex 24 | Comp Ex 24 | Comp Ex 25 | Comp Ex 26 | Comp Ex 27 | Comp Ex 28 | Comp Ex 29 |
|---|---|---|---|---|---|---|---|---|
| Pigment (C) | MA-100 | 2.0 | 2.0 | 2.4 | 2.4 | 2.4 | 2.4 | 2.4 |
| Pigment dispersant | DISPERBYK-2025 | 0.8 | 0.8 | 0.96 | 0.96 | 0.96 | 0.96 | 0.96 |
| Leveling agent | BYK-300 | 0.5 | 0.5 | 0.6 | 0.6 | 0.6 | 0.6 | 0.5 |
| Diluent | butyl acetate | 76.4 | 76.4 | 111.7 | 111.7 | 111.7 | 111.7 | 111.7 |
| | butyl acetate/diacetone alcohol = 80/20 | 66.0 | 66.0 | 79.0 | 79.0 | 79.0 | 79.0 | 79.0 |
| Curing condition | | UV curing (800 mJ/cm$^2$) | | | | | | |
| Properties | Curing property | Good | Unsatisfactory | Good | Unsatisfactory | Unsatisfactory | Unsatisfactory | Unsatisfactory |
| | Adhesion — First | 100/100 | 100/100 | 100/100 | 100/100 | 100/100 | 100/100 | 100/100 |
| | Adhesion — Second | 100/100 | 100/100 | 100/100 | 100/100 | 100/100 | 100/100 | 100/100 |
| | Chemical resistance | Good | Good | Poor | Good | Good | Good | Good |
| | Abrasion resistance | Good | Unsatisfactory | Poor | Unsatisfactory | Unsatisfactory | Unsatisfactory | Unsatisfactory |

[Table 13]

| Components | | Comp Ex 30 | Comp Ex 31 | Comp Ex 32 | Comp Ex 33 | Comp Ex 34 | Comp Ex 35 | Comp Ex 36 |
|---|---|---|---|---|---|---|---|---|
| Copolymer (A) | A-5 | | | | | | | |
| | A-6 | | | | | | | |
| | A-7 | | | | | | | |
| | A-8 | | | | | | | |
| | A-9 | | | | | | | |
| | A-10 | | | | | | | |
| | A-11 | | | | | | | |
| | A-12 | | | | | | | |
| | A-13 | | | | | | | |
| | A-14 | | | | | | | |
| | A-16 | | | | | | | |
| Cocondensate (a) | a-1 | | | | | | | |
| | a-2 | | | | | | | |
| | a-3 | | | | | | | |
| | a-4 | | | | | | | |
| | a-5 | 100 | | | | | | |
| | a-6 | | 100 | | | | | |
| | a-7 | | | 100 | | | | |
| | a-8 | | | | 100 | | | |
| | a-9 | | | | | 100 | | |
| | a-10 | | | | | | 100 | |
| Urethane acrylate | U-6LPA | | | | | | | 50 |
| Photo-acid generator (B) | CPI-101A | 1.8 | 1.8 | 1.8 | 1.8 | 1.8 | 1.8 | |
| Photo-radical | DAROCUR1173 | | | | | | | 1.0 |

| Components | | Comp Ex 30 | Comp Ex 31 | Comp Ex 32 | Comp Ex 33 | Comp Ex 34 | Comp Ex 35 | Comp Ex 36 |
|---|---|---|---|---|---|---|---|---|
| generator | IRGACURE819 | | | | | | | 0.5 |
| Pigment (C) | MA-100 | 2.4 | 2.4 | 2.4 | 2.4 | 2.4 | 2.4 | 2.0 |
| Pigment dispersant | DISPERBYK-2025 | 0.96 | 0.96 | 0.96 | 0.96 | 0.96 | 0.96 | 0.8 |
| Leveling agent | BYK-300 | 0.6 | 0.6 | 0.6 | 0.6 | 0.6 | 0.6 | 0.5 |
| Diluent | butyl acetate | 111.7 | 111.7 | 111.7 | 111.7 | 111.7 | 111.7 | 121.4 |
| | butyl acetate/diacetone alcohol = 80/20 | 79.0 | 79.0 | 79.0 | 79.0 | 79.0 | 79.0 | 64.1 |
| Curing condition | | | | | | | | |
| Properties | Curing property | Unsatisfactory | Unsatisfactory | Unsatisfactory | Unsatisfactory | Unsatisfactory | Unsatisfactory | Poor |
| | Adhesion — First | 100/100 | 100/100 | 100/100 | 100/100 | 100/100 | 100/100 | Unevaluable |
| | Adhesion — Second | 100/100 | 100/100 | 100/100 | 100/100 | 100/100 | 100/100 | Unevaluable |
| | Chemical resistance | Good | Good | Good | Good | Good | Good | Unevaluable |
| | Abrasion resistance | Unsatisfactory | Unsatisfactory | Unsatisfactory | Unsatisfactory | Unsatisfactory | Unsatisfactory | Unevaluable |

[Preparation of test piece]

An ABS plate (50 mm × 150 mm) was coated with a transparent coating agent resin composition prepared as shown in Table 6 or a pigment containing coating agent resin composition prepared as shown in Table 7 with use of an air spray so that a dry film thickness was to be approximately 15 μm. The transparent coating agent resin composition or the pigment containing coating agent resin composition was then dried at 80°C for 10 minutes so as to remove a solvent. A coated plate was thus obtained.

An ABS plate (50 mm × 150 mm) was coated with a transparent coating agent resin composition prepared as shown in Table 8, 9, or 10 or a pigment containing coating agent resin composition prepared as shown in Table 11, 12, or 13 with use of an air spray so that a dry film thickness was to be approximately 15 μm. The transparent coating agent resin composition or the pigment containing coating agent resin composition was then dried at 80°C for 15 minutes so as to remove a solvent. A coated plate was thus obtained.

As illustrated in Fig. 1, the coated plate coated with the transparent coating agent resin composition was shielded so that a part of a coated portion of the coated plate was not to be irradiated with the active energy ray. Then, the coated plate was irradiated in the air with an ultraviolet ray (UV), serving as an active energy ray, with use of a high pressure mercury lamp so that the transparent coating agent resin composition was cured. Note that such irradiation was carried out at 160 mW so that an accumulated amount of the ultraviolet ray, having a wavelength of 310 nm to 390 nm, was 800 mJ/cm$^2$. As a result, a test piece was prepared.

While not being shielded as illustrated in Fig. 1, the coated plate coated with the pigment containing coating agent resin composition was irradiated in the air with an ultraviolet ray (UV), serving as an active energy ray, with use of the high pressure mercury lamp so that the pigment containing coating agent resin composition was cured. Note that such irradiation was carried out at 160 mW so that an accumulated amount of the ultraviolet ray, having a wavelength of 310 nm to 390 nm, was 800 mJ/cm$^2$. As a result, a test piece was prepared. Physical properties of test pieces thus obtained were evaluated. Table 3 or 4 shows results of evaluating the physical properties of the test pieces.

The transparent coating agent of each of Examples 1 through 3 and 7 through 15 yielded excellent results in curing property, chemical resistance (or alkali resistance), and abrasion resistance not only in an irradiated portion but also in a shielded portion.

The coloring pigment containing coating agent of each of Examples 4 through 6 and 16 through 24 also yielded excellent results in curing property, chemical resistance (or alkali resistance), abrasion resistance, and weather resistance.

Meanwhile, it was impossible to form a cured coating film in the shielded portion, in Comparative Examples 5 and 13, in each of which an active energy ray curable coating agent containing a photo-radical generator, which active energy ray curable coating agent was a conventional coating agent, was used. In Comparative Example 10, it was shown that a curing property, alkali resistance, abrasion resistance, and weather resistance were insufficient. Further, also in Comparative Example 36, it was shown that it was impossible to form a cured coating film.

In Comparative Examples 1, 6, 13, and 36, in each of which a coating agent containing a polymer that did not contain a cocondensate (a) was used, it was shown that abrasion resistance was insufficient. In Comparative Examples 2 through 4 and 7 through 9, in each of which a coating agent containing only a cocondensate (a) was used, it was shown that a curing property was insufficient. Further, it was shown that a curing property in the shielded portion was insufficient, in Comparative Examples 13 through 22 and 26 through 25, in each of which a coating agent containing only a cocondensate (a) was used, and in Comparative Examples 11 and 24, in each of which a coating agent containing a copolymer (A) that contained a cocondensate (a) having less than 0.1 polymerizable unsaturated groups per molecule was used.

As described above, it was confirmed that the coating resin composition of the present invention provides an active energy ray cured coating film which is excellent in curing property, abrasion resistance, chemical resistance, and weather resistance even under a condition that irradiation with an active energy ray is partially blocked.

Industrial Applicability

According to the present invention, it is possible to provide an active energy ray cured coating film which is excellent in curing property, abrasion resistance, chemical resistance, and weather resistance. Accordingly, the present invention is suitably applicable to a field of various coating agents.

**Claims**

**1.** An active energy ray curable composition comprising:

a copolymer (A); and

a photo-acid generator (B),

the copolymer (A) being obtained by reacting a cocondensate (a) with a polymerizable unsaturated monomer (b),

the cocondensate (a) being obtained by hydrolyzing and condensing a silane compound (I), having a hydrolyzable silyl group, and a silane compound (II), having a hydrolyzable silyl group,

the cocondensate (a) having 0.1 to 3.0 polymerizable unsaturated groups per molecule,

the silane compound (I) being represented by the following general formula (I):

$$R^1\text{-}(SiR^2{}_a(OR^3)_{3\text{-}a}) \qquad (I)$$

wherein: $R^1$ represents a C1-C10 alkyl group terminally substituted by an epoxy structure containing group; each $R^2$ independently represents a hydrogen atom or a monovalent hydrocarbon group selected from a C1-C10 alkyl group, a C6-C25 aryl group, and a C7-C12 aralkyl group; each $R^3$ independently represents a hydrogen atom or a C1-C10 alkyl group; and "a" represents an integer of 0 to 2,

the silane compound (II) being represented by the following general formula (II):

$$R^4\text{-}(SiR^2{}_a(OR^3)_{3\text{-}a}) \qquad (II)$$

wherein: $R^4$ is selected from a substituted C1-C10 alkyl group, an alkenyl group, and an unsubstituted or substituted aryl group each terminally having a polymerizable unsaturated group and each having no epoxy structure containing group; each $R^2$ independently represents a hydrogen atom or a monovalent hydrocarbon group selected from a C1-C10 alkyl group, a C6-C25 aryl group, and a C7-C12 aralkyl group; each $R^3$ independently represents a hydrogen atom or a C1-C10 alkyl group; and "a" represents an integer of 0 to 2.

2. The active energy ray curable composition as set forth in claim 1, wherein the polymerizable unsaturated monomer (b) is at least one kind of monomer selected from the group consisting of a monomer having a (meth)acryloyl group, a monomer having a vinyl group, a monomer having an aryl group, and a monomer having a styryl group.

3. The active energy ray curable composition as set forth in claim 1 or 2, wherein the polymerizable unsaturated monomer (b) contains a polymerizable unsaturated monomer having at least one or more kinds of hydrolyzable silyl groups and/or a polymerizable unsaturated monomer having an epoxy group.

4. The active energy ray curable composition as set forth in any one of claims 1 through 3, wherein the active energy ray curable composition contains the photo-acid generator (B) in an amount of 0.01 parts by mass to 10 parts by mass relative to 100 parts by mass of the copolymer (A).

5. The active energy ray curable composition as set forth in any one of claims 1 through 4, wherein the photo-acid generator (B) is an aromatic sulfonium salt or an aromatic iodonium salt.

6. The active energy ray curable composition as set forth in claim 5, wherein a counter anion of the photo-acid generator (B) is a fluorophosphonate anion or a fluoroantimonate anion.

7. An active energy ray curable composition as set forth in any one of claims 1 through 6, further comprising a pigment (C).

8. An active energy ray curable composition as set forth in any one of claims 1 through 7, further comprising a photosensitizer (D).

9. The active energy ray curable composition as set forth in claim 8, wherein the photosensitizer (D) is an anthracene derivative, a thioxanthone derivative, or a benzophenone derivative.

10. A method of forming a cured coating film, the method comprising:

applying, to a base material, an active energy ray curable composition recited in any one of claims 1 through 9; and

irradiating the active energy ray curable composition with an active energy ray so that a cured film is formed.

11. A cured product obtained by (i) applying, to a base material, an active energy ray curable composition recited in any one of claims 1 through 9 and (ii) irradiating the active energy ray curable composition with an active energy ray so that a cured film is formed.

12. A laminated product in which a cured film made of an active energy ray curable composition recited in any one of claims 1 through 9 is formed on a surface of a base material.

FIG. 1

SIDE VIEW

ACTIVE ENERGY RAY

SHIELDING
PLATE

COATED PLATE

TOP VIEW

COATED
PLATE

SHIELDING PLATE

COATED
PLATE

IRRADIATED
PORTION

SHIELDED PORTION

IRRADIATED
PORTION

## INTERNATIONAL SEARCH REPORT

| International application No. |
|---|
| PCT/JP2015/077770 |

A.  CLASSIFICATION OF SUBJECT MATTER
*C08G59/68*(2006.01)i, *C09D7/12*(2006.01)i, *C09D163/00*(2006.01)i

According to International Patent Classification (IPC) or to both national classification and IPC

B.  FIELDS SEARCHED

Minimum documentation searched (classification system followed by classification symbols)
C08G59/68, C09D7/12, C09D163/00

Documentation searched other than minimum documentation to the extent that such documents are included in the fields searched
Jitsuyo Shinan Koho        1922–1996   Jitsuyo Shinan Toroku Koho   1996–2015
Kokai Jitsuyo Shinan Koho   1971–2015   Toroku Jitsuyo Shinan Koho   1994–2015

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| P,A | WO 2014/204010 A1  (Kaneka Corp.), 24 December 2014 (24.12.2014), claims; examples (Family: none) | 1–12 |
| A | JP 5-295272 A  (Three Bond Co., Ltd.), 09 November 1993 (09.11.1993), entire text & US 5384340 A entire text | 1–12 |

[X] Further documents are listed in the continuation of Box C.      [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 December 2015 (11.12.15) | 22 December 2015 (22.12.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

**EP 3 202 811 A1**

**INTERNATIONAL SEARCH REPORT**

| International application No. |
| --- |
| PCT/JP2015/077770 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2011-518666 A  (Momentive Performance Materials Inc.), 30 June 2011 (30.06.2011), entire text & US 2009/0269504 A1 entire text & WO 2009/131680 A1      & EP 2268716 A1 & KR 10-2010-0134689 A  & MX 2010011569 A & CN 102066464 A | 1-12 |
| A | JP 2006-199765 A  (Nippon Kayaku Co., Ltd.), 03 August 2006 (03.08.2006), entire text (Family: none) | 1-12 |
| A | JP 2001-122966 A  (Arakawa Chemical Industries, Ltd.), 08 May 2001 (08.05.2001), entire text (Family: none) | 1-12 |

Form PCT/ISA/210 (continuation of second sheet) (July 2009)

46

**EP 3 202 811 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5230397 A
- JP 2000109695 A
- JP 2009073944 A
- JP 2014061630 A
- JP 2014118557 A
- JP 5134412 A
- US 4618564 A
- US 4540598 A
- JP 6067433 A
- JP 6348015 A
- JP 6418143 B
- JP 55032070 A
- JP 48036281 A
- JP 63238339 A
- JP 2304059 A